# EUROPEAN PATENT APPLICATION

(11) **EP 4 750 122 A1**
(43) Date of publication of application: **27.05.2026**
(21) Application number: 23957987.3
(22) Date of filing: 09.11.2023
(51) Int. Cl.: H04W 24/02

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: CHEN, Jingran, Dongguan, Guangdong 523860 (CN)
(74) Representative: Penza, Giancarlo
(86) International application number: PCT/CN2023/130747
(87) International publication number: WO 2025/097379

(57) **Abstract**

Provided are a wireless communication method and a communication device. The method comprises: a first device sends a first request to one or more second devices, the first request being used for requesting the one or more second devices to train a model associated with a first service. In the embodiments of the present application, a plurality of second devices are introduced to participate in the training process of a model. Different second devices are associated with data features of different dimensions, and therefore, in the embodiments of the present application, a model can be trained on the basis of data features of multiple dimensions, thereby improving the accuracy of the model training result. Then, the performance of communication devices can be analyzed by means of the trained model, thereby improving the comprehensiveness and accuracy of performance analysis results.

## Description

### TECHNICAL FIELD

The present disclosure relates to the technical field of communications, and more particularly, to a method for wireless communication and a communication device.

### BACKGROUND

In a communication system, a terminal device is analyzed based on a single data feature in the related art. For example, based on a horizontal federated learning architecture, a connection establishment performance of the terminal device is analyzed based on connection establishment information. Then, how to perform performance analysis based on data features of different dimensions of users to improve comprehensiveness and accuracy of performance analysis results is a problem that needs to be solved.

### SUMMARY

The present disclosure provides a method for wireless communication and a communication device. Various aspects of the present disclosure are described below.

In a first aspect, there is provided a method for wireless communication, which includes that: a first device transmits a first request to one or more second devices, where the first request is for requesting the one or more second devices to train a model associated with a first service.

In a second aspect, a method for wireless communication is provided, which includes that: a second device receives a first request transmitted by a first device, where the first request is for requesting the second device to train a model associated with a first service.

In a third aspect, there is provided a method for wireless communication, which includes that: a first device transmits a third request to one or more second devices, where the third request is for requesting the one or more second devices to perform model inference on a model associated with a first service.

In a fourth aspect, there is provided a method for wireless communication, which includes that: a second device receives a third request transmitted by a first device, where the third request is for requesting the second device to perform model inference on a model associated with a first service.

In a fifth aspect, there is provided a communication device, where the device is a first device and includes: a first transmission unit, configured to transmit a first request to one or more second devices, where the first request is used to request the one or more second devices to train a model associated with a first service.

In a sixth aspect, there is provided a communication device, where the device is a second device, and the device includes: a first receiving unit, configured to receive a first request transmitted by a first device, where the first request is used to request the second device to train a model associated with a first service.

In a seventh aspect, there is provided a communication device, where the device is a first device, and the device includes: a first transmission unit, configured to transmit a third request to one or more second devices, where the third request is used to request the one or more second devices to perform model inference on a model associated with a first service.

In an eighth aspect, there is provided a communication device, where the device is a second device, and the device includes: a receiving unit, configured to receive a third request transmitted by a first device, where the third request is used to request the second device to perform model inference on a model associated with a first service.

In a ninth aspect, there is provided a communication device including a processor, a memory and a communication interface, where the memory is for storing one or more computer programs, the processor is for invoking the computer programs from the memory, to cause a terminal device to perform some or all of the steps in the method of the first or third aspect.

In a tenth aspect, there is provided a communication device comprising a processor, a memory and a communication interface, where the memory is for storing one or more computer programs, the processor is for invoking the computer programs from the memory, to cause a terminal device to perform some or all of the steps in the method of the second or fourth aspect.

In an eleventh aspect, an embodiment of the present disclosure provides a communication system including the above-described communication device. In another possible design, the system may also include other devices that interact with the communication devices in the solutions provided by the embodiments of the present disclosure.

In a twelfth aspect, embodiments of the present disclosure provide a computer-readable storage medium storing a computer program that causes a communication device to perform some or all of the steps in the method of the above aspects.

In a thirteenth aspect, embodiments of the present disclosure provide a computer program product, where the computer program product includes a non-transitory computer-readable storage medium storing a computer program operable to cause a communication device to perform some or all of the steps of the methods of the above aspects. In some implementations, the computer program product may be a software installation package.

In a fourteenth aspect, embodiments of the present disclosure provide a chip including a memory and a processor, and the processor can call and run a computer program from the memory to implement some or all of the steps described in the methods of the above aspects.

In the embodiment of the present disclosure, multiple second devices are introduced to participate in the training process of the model. Since different second devices are associated with data features of different dimensions, embodiments of the present disclosure can train a model based on multi-dimensional data features, thereby improving the accuracy of model training results. Then, performance of a communication device is analyzed based on the trained model, which can improve the comprehensiveness and accuracy of performance analysis results.

### BRIEF DESCRIPTION OF THE DRAWINGS

FIG. 1 illustrates a wireless communication system to which an embodiment of the present disclosure is applied.
FIG. 2 is a schematic diagram of a training process for vertical federated learning.
FIG. 3 is a schematic diagram of an inference process for vertical federated learning.
FIG. 4 is an example diagram of an application of a horizontal federated learning architecture in a communication system.
FIG. 5 is a schematic flowchart of a method for wireless communication according to an embodiment of the present disclosure.
FIG. 6 is a diagram illustrating an application example of a vertical federated learning architecture in a communication system according to an embodiment of the present disclosure.
FIG. 7 is a schematic flowchart of a method for wireless communication according to another embodiment of the present disclosure.
FIG. 8 is a schematic flowchart of a model training method based on a vertical federated learning architecture according to an embodiment of the present disclosure.
FIG. 9 is a schematic flowchart of a model inference method based on a vertical federated learning architecture according to an embodiment of the present disclosure.
FIG. 10 is a schematic diagram of a communication device according to an embodiment of the present disclosure.
FIG. 11 is a schematic diagram of a communication device according to another embodiment of the present disclosure.
FIG. 12 is a schematic diagram of a communication device according to yet another embodiment of the present disclosure.
FIG. 13 is a schematic diagram of a communication device according to still another embodiment of the present disclosure.
FIG. 14 is a schematic structural diagram of a communication apparatus according to an embodiment of the present disclosure.

### DETAILED DESCRIPTION

Technical solutions in the present disclosure will be described below with reference to the accompanying drawings.

### Communication system architecture

The technical solutions in embodiments of the present disclosure can be applied to various communication systems, such as a global system of mobile communication (GSM) system, a code division multiple access (CDMA) system, a wideband code division multiple access (WCDMA) system, a general packet radio service (GPRS) system, a long term evolution (LTE) system, an advanced long term evolution (LTE-A) system, a LTE frequency division duplex (FDD) system, a LTE time division duplex (TDD) system, a new radio (NR) system, an evolution system of NR system, a LTE-based access to unlicensed spectrum (LTE-U) system, a NR-based access to unlicensed spectrum (NR-U) system, an non-terrestrial networks (NTN) system, a terrestrial networks (TN) system, a universal mobile telecommunication system (UMTS), a wireless local area networks (WLAN) system, a wireless fidelity (WIFI) system, a 5th-generation (5G) system, etc. The technical solutions provided in the present disclosure can also be applied to other communication systems, such as future communication systems, such as a sixth-generation mobile communication system, a satellite communication system, and the like.

Generally speaking, conventional communication systems support a limited number of connections and are easy to implement. However, with the development of communication technology, the mobile communication system will support not only conventional communication, but also, for example, device-to-device (D2D) communication, machine-to-machine (M2M) communication, machine type communication (MTC), vehicle-to-vehicle (V2V) communication, vehicle-to-everything (V2X) communication, or the like. The embodiments of the present disclosure can also be applied to these communication systems.

The communication system in the embodiment of the present disclosure can be applied to a carrier aggregation (CA) scenario, a dual connectivity (DC) scenario, or a standalone (SA) network layout scenario.

The communication system in the embodiment of the present disclosure can be applied to an unlicensed spectrum, where the unlicensed spectrum can also be regarded as a shared spectrum. Alternatively, the communication system in the embodiment of the present disclosure may also be applied to a licensed spectrum, where the licensed spectrum may also be regarded as a dedicated spectrum.

An important feature of communication system architecture (such as 5G system architecture) is that the communication system architecture can be a service-oriented architecture, that is, a network element (a service provider) in the core network can provide specific services and make them available to other network elements (consumers) through a predefined application programming interface (API).

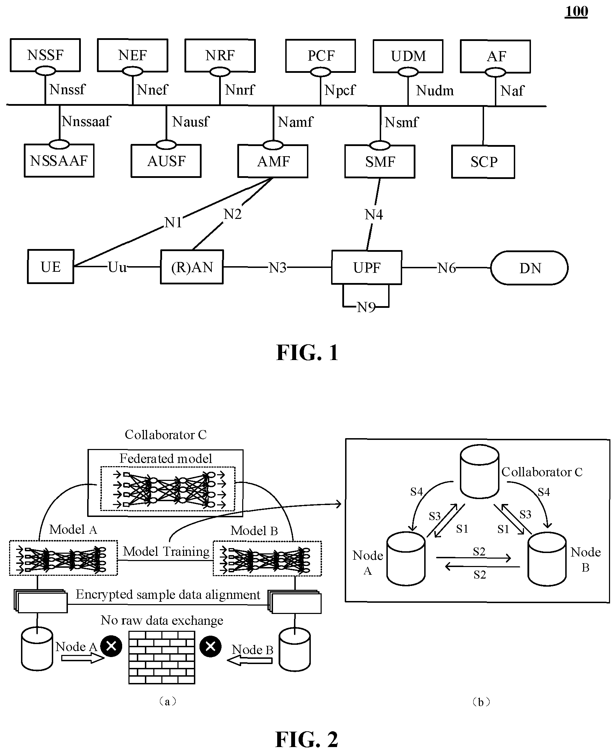

FIG. 1 is an example system architecture diagram of a wireless communication system to which an embodiment of the present disclosure can be applied. Taking the 5G system architecture as an example, the wireless communication system may include multiple network elements, nodes, or devices, such as terminal devices, access network (AN) devices, user plane function (UPF) network elements, access and mobility management function (AMF) network elements, session management function (SMF) network elements, policy control function (PCF) network elements, application function (AF) network elements, and the like. The wireless communication system may also include a data network (DN) or the like.

The functions of each part or network element involved in the wireless communication system in the 5G network will be described below as an example.

Terminal device: a terminal device may also be referred to as a user equipment (UE), an access terminal, a subscriber unit, a subscriber station, a mobile platform, a mobile station (MS), a mobile terminal (MT), a remote station, a remote terminal, a mobile device, a user terminal, a terminal, a wireless communication device, a user agent or a user device. The terminal device in the embodiments of the present disclosure may be a device that provides voice and/or data connectivity to a user, and may be used to connect people, objects, and machines, for example, a handheld device having a wireless connection function, a vehicle-mounted device, or the like. The terminal device in the embodiments of the present disclosure may be a mobile phone, a Pad, a notebook computer, a handheld computer, a mobile internet device (MID), a wearable device, a vehicle device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like.

Access network device: an access network device can provide network access functions for authorized terminal devices within a specific area, and can use transmission channels of different quality according to levels and service requirements of the terminal devices. The access network device can manage wireless resources, provide access services for the terminal devices, and thus complete the forwarding of control signals and data between the terminal devices and the core network.

The access network device may be a device within a wireless network. The access network device may also be referred to as a radio access network (RAN) device or a network device, for example, the access network device may be a base station. The access network device in the embodiments of the present disclosure may refer to a radio access network (RAN) node (or device) that connects the terminal device to the wireless network. The base station may generally cover various names such as, for example, a NodeB, an evolved NodeB (eNB), a next generation NodeB (gNB), a relay station, an access point, a transmitting and receiving point (TRP), a transmitting point (TP), a master station (MeNB), a secondary station (SeNB), an MSR node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), a location node, and the like. The base station may be a macro base station, a micro base station, a relay node, a donor node, or the like, or a combination thereof. The base station may also refer to a communication module, modem, or chip installed within the aforementioned device or apparatus. The base station may also be a mobile switching center, a device that serves as a base station in a device-to-device (D2D) communication, a vehicle-to-everything (V2X) communication, or a machine-to-machine (M2M) communication, a network-side device in a 6G network, a device that serves as a base station in a future communication system, or the like. The base stations may support networks of the same or different access technologies. The embodiments of the present disclosure do not limit the specific technology and the specific device form adopted by the access network device.

The base station may be fixed or mobile. For example, a helicopter or drone may be configured to act as a mobile base station, and one or more cells may move according to the location of the mobile base station. In other examples, a helicopter or drone may be configured as a device to communicate with another base station.

In some deployments, the access network device in the embodiment of the present disclosure may refer to a CU or a DU, or the access network device includes a CU and a DU. The gNB may also include an AAU.

The access network device and the terminal device can be deployed on land, including indoors or outdoors, handheld or vehicle-mounted; or they can also be deployed on the water surface; or they can also be deployed on aircraft, balloons and satellites in the air. In the embodiment of the present disclosure, the scenario in which the access network device and the terminal device are located is not limited.

UPF network element: UPF is a user plane function in the core network, which can be responsible for forwarding and receiving user data (such as a service data flow) in the terminal device. The UPF can be connected to an access network device (such as a base station) and an external data network for data transmission. For example, the UPF may receive user data from the DN and transmit it to the terminal device through the access network device. Alternatively, the UPF may also receive user data from the terminal device through the access network device and then forward it to the DN. Transmission resources and scheduling functions that provide services for the terminal device in the UPF are managed and controlled by an SMF. In some embodiments, the UPF may be divided into an intermediate-UPF (I-UPF) and an anchor-UPF (A-UPF). Among them, the I-UPF is connected to the access network, and the A-UPF is an UPF of the session anchor. The A-UPF can also be called a PDU session anchor (PSA).

AMF network element: AMF is a mobility management function in the core network, and can be used to implement other functions of the mobility management entity (MME) other than session management, such as lawful interception, or access authorization (or authentication) functions. In some embodiments, the AMF may be responsible for forwarding session management-related messages between the terminal device and the SMF in addition to mobility management of the terminal device.

SMF network element: SMF is a session management function in the core network. It is mainly responsible for session management, internet protocol (IP) address allocation and management of a terminal device, selection of an endpoint for managing user plane function, policy control, or charging function interface, downlink data notification, configuration of routing information for user plane function, etc.

PCF network element: PCF is a policy management function in the core network, which can be responsible for formulating policies related to mobility management, session management, billing, etc. of a terminal device. Specifically, the PCF may provide policy and rule information and the like for functional network elements (e.g., the AMF network element, the SMF network element, etc.) of the control plane to manage and control mobility management, session management, and the like of the terminal device.

AF network element: AF mainly supports interaction with the core network of the 3rd generation partnership project (3GPP) to provide services, for example, affecting data routing decisions, policy control functions, or providing some services of third parties to the network side. In other words, the AF may be mainly used to convey the requirements of the application side to the network side. In some embodiments, the AF may be an operator-internal application, such as IP multimedia subsystem (IMS) technology. In some embodiments, the AF may be understood as a third-party server, for example, an application server in the Internet, which provides relevant service information, including providing the PCF with quality of service (QoS) requirement information corresponding to a service, and sending user plane data information of the service to the A-UPF. In some embodiments, the AF may also be a content provider (CP). In some embodiments, if the AF is an operator-internal AF and is within a trusted domain with other network functions (NFs), it can directly interact with the other NFs for access; if the AF is not within the trusted domain, it needs to access the other NFs through other network elements (e.g., NEF network element hereinafter).

DN: A DN refers to a network that can be used to provide data transmission. The DN can be a private network, such as a local area network, an external network that is not controlled by the operator, such as the internet, or a proprietary network jointly deployed by the operator, such as a network providing IMS services.

Optionally, the wireless communication system may further include a unified data management (UDM) network element, an authentication server function (AUSF) network element, a network slice selection function (NSSF) network element, a network exposure function (NEF) network element, a network data analytics function (NWDAF) network element, a network repository function (NRF) network element and other network elements, which are not limited by the embodiments of the present disclosure.

The UDM network element is a subscription database in the core network, which can be used to generate and store subscription data of users in the network (e.g., 5G network), manage authentication data and other functions. The UDM network element may support interaction with an external third-party server. The AUSF network element can be used to receive a request from the AMF for authentication of the terminal device, request a key from the UDM, and then forward the issued key to the AMF for authentication processing. The NSSF network element may be used for selection of network slices.

The NEF network element can be responsible for managing the exposure of network data to external entities by the 5G network element. External untrusted applications need to access the internal data of the core network through NEF to ensure the security of the 3GPP network. In some embodiments, the NEF network element may also provide functions such as external application QoS capability opening, event subscription, and AF request distribution. The NWDAF network element can collect data from various network elements, network management systems, etc. in the core network for big data statistics, analysis, or intelligent data analysis, so as to obtain network-side analysis results or network-side prediction data, and thus can assist the various network elements to more effectively control the terminal device according to the data analysis results.

The NSSF network element is a network slice selection function in the core network, and its supported functions include: selecting a network slice instance set serving the UE; determining an allowed network slice selection assistance information (NSSAI) and, if needed, a mapping to a subscribed single-network slice selection assistance information (S-NSSAI); determining a configured NSSAI and, if needed, a mapping to a subscribed S-NSSAI; determining a set of AMFs that may be used to query the UE, or determining a list of candidate AMFs based on the configuration.

The AUSF network element can be used to receive the request from the AMF to authenticate the terminal, request the key from the UDM, and then forward the issued key to the AMF for authentication processing.

The NEF network element may be used for capability opening, i.e., based on the NEF, the capability of the network may be output to an external network. External untrusted applications can access the internal data of the core network through the NEF to ensure the security of the network. NEF can provide external application QoS capability opening, event subscription, AF request distribution and other functions.

The NRF network element can be used to register and manage the core network element and monitor the status of the core network element, so as to realize the automatic management of the core network element. When the core network element is started, it must register with the NRF before providing services. The registration information may include, for example, a type, an address, a service list, and the like of a core network element.

The NWDAF network element can collect data from various network elements of the core network, network management systems, etc., and perform big data statistics, analysis or intelligent data analysis to obtain network-side analysis or prediction data, thereby assisting each network element in more effectively controlling terminal device access according to the data analysis results.

It should be understood that the above functional entities in the core network may also be referred to as network elements, and the present disclosure is not limited thereto. Exemplarily, the UPF entity may also be referred to as a UPF network element, the AMF entity may also be referred to as an AMF network element, or the like.

It should also be understood that in some embodiments, the xx functional entity or the xx network element may also be simply referred to as xx. For example, the UPF entity (or UPF network element) may be simply referred to as UPF, and the AMF entity (or AMF network element) may be simply referred to as AMF. For convenience of description, xx (such as UPF, AMF, etc.) mentioned in the embodiments of the present disclosure may refer to xx entity or xx network element, and will not be described hereinafter.

In the communication system illustrated in FIG. 1, various parts or functional entities may communicate with each other through interfaces. For example, a terminal device can connect to the AN via an Uu interface for access stratum (AS) connection, to exchange AS messages and transmit wireless data. The terminal device can connect to the AMF via an N1 interface for non-access stratum (NAS) connection, to exchange NAS messages. The AN can be connected to the AMF via an N2 interface to transmit radio bearer control information from the core network side to the AN. The UPF can transmit data with the AN via an N3 interface, and with the DN via an N6 interface, etc. The interfaces connecting other parts or functional entities can be seen to in FIG. 1, and will not be described herein.

It should be understood that the network architecture described above is merely an exemplary description, and the network architecture applicable to the embodiments of the present disclosure is not limited thereto, and any network architecture capable of realizing the functions of the above-described functional entities is applicable to the embodiments of the present disclosure.

It should be understood that the access network device, the AMF, the SMF, the UPF, the PCF, etc. illustrated in FIG. 1 are only names, and the names do not limit the device itself. In the 5G network and other future networks, the entities corresponding to the access network device, the AMF, the SMF, the UPF, the PCF, and the like may have other names, which are not specifically limited in the embodiments of the present disclosure.

It should be understood that the interface names between functional entities illustrated in FIG. 1 are merely an example, and the interface names between functional entities in specific implementation may be other names, such as interface names between functional entities in a 6G network, and the embodiments of the present disclosure do not specifically limit this.

It should be understood that all or part of the functions of the communication device in the present disclosure may also be implemented by software functions running on hardware, or by virtualization functions instantiated on a platform, such as a cloud platform.

It should be understood that the network architecture described in the embodiments of the present disclosure is to more clearly explain the technical solutions of the embodiments of the present disclosure, and does not constitute a limitation on the technical solutions provided by the embodiments of the present disclosure. Those skilled in the art can know that with the evolution of the network architecture, the embodiments of the present disclosure can also be applied to similar technical problems.

In recent years, artificial intelligence (AI) research represented by neural networks has achieved great results in many fields, and it will also play an important role in people's production and life for a long time to come.

### Federated Learning (FL)

Federated learning may include horizontal federated learning, vertical federated learning (VFL), and federated transfer learning. Federated learning is a new paradigm of encrypted distributed machine learning, which allows all participants to collaborate on AI without exchanging/sharing the local data, realizing "knowledge sharing without data sharing" and improving the performance of their AI models.

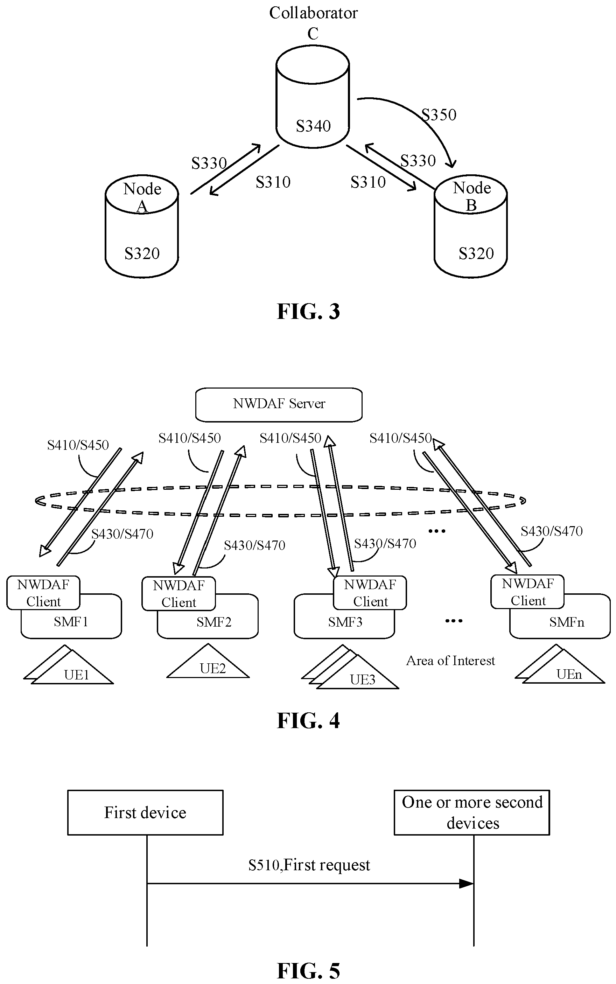

The vertical federated learning architecture is introduced below with reference to FIG. 2 and FIG. 3. As illustrated in FIG. 2 and FIG. 3, the vertical federated learning is generally applicable to a federated learning scenario composed of participants (for example, node A and node B) with the same sample space but different feature spaces on a data set. Vertical federated learning can also be understood as federated learning based on feature partitioning.

Assuming that a node A and a node B want to collaboratively train a model (for example, a model A and/or a model B), due to user privacy and data security reasons, the node A and the node B cannot directly exchange data. Therefore, a third-party collaborator C needs to be introduced. The collaborator C can be a semi-honest third party, and is independent of the node A and the node B. The collaborator C is mainly used to help the node A and the node B to perform secure federated learning. It collects intermediate results from the model A and the model B during model training, computes gradients and loss values, and then forwards the computation results to the node A and the node B so that the node A and the node B can train their models respectively. Information received by the collaborator C from the node A and the node B is encrypted or obfuscated, so the original data of each party is not exposed to each other. Additionally, the nodes A and B will only receive model parameters related to features they possess.

FIG. 2 is a schematic diagram of a training process in vertical federated learning to which an embodiment of the present disclosure is applicable. As illustrated in FIG. 2, the training process of vertical federated learning generally includes two parts: the first part is to align encrypted sample data with the same ID but distributed among different participants; and the second part is to train the model based on the aligned encrypted sample data.

The first part: encrypted sample data alignment. Since users corresponding to the sample data in the node A and the node B may be different, the system makes it possible to use an encryption-based user ID alignment technique to ensure that the node A and the node B can align common users without exposing their original data. During the alignment of encrypted samples, the system does not expose users belonging to a certain node.

In the second part, the model is trained based on the aligned encrypted sample data. The steps thereof may include operations S1 to S4.

Referring to (B) of FIG. 2, in S1, the collaborator C sends public keys to the node A and the node B. The public keys are used to encrypt sample data that needs to be transmitted. In some implementations, homomorphic encryption can be used. That is, the homomorphic encryption is performed on the two sample data m1 and m2, which is equal to the homomorphic encryption of m1 plus the homomorphic encryption of m2. The homomorphic encryption of sample m multiplied by a constant is equal to homomorphically encrypting this sample and then multiplying it by the constant.

In S2: The intermediate results are exchanged between the node A and the node B. Usually, the party that owns the sample label is an initiator or a requester, such as the node B. The node A is a data provider (i.e., a passive participant), and this node does not have the label of sample data. The node A and the node B respectively use local data to calculate to obtain the intermediate results of the model The node A encrypts the intermediate result and sends it to the node B, the node B calculates a overall output error of the model according to its own label, the model output result of the node A and the model output result of the node B, and then encrypts the output error and sends it to the node A.

In S3, gradients and loss are computed. The node A and the node B respectively calculate their encrypted gradients according to the output error, add masks, and send them to the collaborator C. In addition, the node B can also compute the loss and send the encrypted loss to the collaborator C.

In S4, models are updated. The collaborator C can decrypt the gradients and loss, and return the results to the node A and the node B, respectively. After removing the mask, the node A and the node B can update the models based on the gradients and loss.

FIG. 3 is a schematic diagram of an inference process of vertical federated learning to which an embodiment of the present disclosure is applicable. Referring to FIG. 3, the inference process may include operations S310 to S340.

In S310, the collaborator C may send a model inference request to the node A and the node B, respectively, to request the node A and the node B to perform the model inference. The model inference request may also indicate models that the node A and the node B need to adopt.

In S320, the node A and the node B input local data into their deployed models to perform model inference, and obtain intermediate results.

In S330, the node A and the node B encrypt their intermediate results, and transmit the encrypted intermediate results to the collaborator C.

In S340, the collaborator C aggregates the intermediate results transmitted by the node A and the node B, and inputs the aggregated intermediate results into the local model for model inference, to obtain an inference result 1. Since the intermediate results are encrypted and transmitted by the node A and the node B respectively, after obtaining the inference result 1, the collaborator C decrypts the inference result 1 to obtain an inference result 2.

In S350, the collaborator C transmits the inference result 2 to the node B.

Horizontal federated learning, also known as a sample-based federated learning, can be applied to scenarios where data sets of participants in federated learning have the same feature space but different sample spaces.

In the related art, a horizontal federated architecture has been introduced into communication systems to improve system performance. The following takes NWDAF as an example that it needs to collect data related to connection establishment of terminal devices and analyze a connection establishment performance of terminal devices in an area of interesting (AOI). Combined with FIG. 4, the application of the horizontal federated architecture in the communication system is illustratively introduced.

In order to analyze the connection establishment performance of the terminal devices, the NWDAF needs to collect relevant connection establishment information of the terminal devices located at multiple SMFs in the AOI. Referring to FIG. 4, SMFs located in the AOI may include SMF1 to SMFn, and each SMF may serve a different terminal device. That is, each SMF can collect and provide connection establishment information of a different terminal device, and for example, the SMF1 to SMFn can provide connection establishment information of UE1 to UEn, respectively. The SMF network element is deployed with an NWDAF client, or the SMF network element and the NWDAF client are jointly set.

The same network element ensures that the feature dimensions of the collected data samples are the same. Different terminal devices provide different data samples. Therefore, the above architecture meets the characteristics of horizontal federated, can collect data of terminal devices from SMFs of different manufacturers, and ensures that local data is not directly shared, thus meeting the data privacy requirements.

The architecture illustrated in FIG. 4 may involve an initiator of model training/inference, as well as participants of the model training/inference. Here, the initiator is, for example, the NWDAF, and the participants may be, for example, the SMF1 to SMFn. The flow of model training based on the architecture illustrated in FIG. 4 may include the following operations S410 to S440 (some operations are not illustrated in FIG. 4).

In S410, the NWDAF initiates model training. At the same time, the NWDAF delivers the model to the participants in model training.

In S420, each SMF trains the initial model according to a respective local data, such as connection establishment information of the terminal device.

In S430, each SMF transmits a respective training result to the initiator (i.e., the NWDAF) of the model training.

In S440, the NWDAF aggregates the model training results from the SMFs to update a global model.

The flow of model inference based on the architecture illustrated in FIG. 4 may include operations S450 to S490 as follows (some operations are not illustrated in FIG. 4).

In S450, the NWDAF initiates model inference. At the same time, NWDAF sends a global model to the participants in model inference.

In S460, after receiving the global model, each SMF may perform model inference based on a respective local data.

In S470, each SMF transmits a respective inference result to the initiator NWDAF of the model inference.

In S480, the NWDAF obtains a final model inference result based on the model inference results from the SMFs.

The above horizontal federated architecture can only be applied to homogeneous network elements, such as scenarios where all network elements are SMFs or all are UPFs, in order to ensure the consistency of data features. In many use cases, data that needs to be collected comes from different domains. For the features of different dimensions of terminal devices, collecting these data can conduct a more comprehensive analysis of terminal devices. The "domain" mentioned herein may refer to a UE, a RAN, a 5GC, an OAM or an application. Different NFs in the 5GC can also be regarded as different domains.

User data is usually distributed in various nodes such as terminals, access network devices, core network devices, and third-party application servers (usually refers to using the network of the operator, but providing the service by a third party other than the operator, also known as an "over the top (OTT) application server"). For example, user data can be distributed across multiple nodes and network elements in the network architecture of the communication system illustrated in FIG. 1. Therefore, how to comprehensively analyze users based on their features in different dimensions is a problem that needs to be solved.

In order to solve the above problems, embodiments of the present disclosure provide a method for training a model based on user features of different dimensions (such as user features corresponding to multiple second devices), which can improve the accuracy of model training results. It should be understood that the model may be an AI model, and of course, the model may also be a new AI model introduced in future communication systems. Alternatively, the model may be an ML model.

The method provided by the embodiments of the present disclosure will be described below with reference to FIG. 5. The method illustrated in FIG. 5 involves an initiator of model training, such as a first device, and a participant in model training, such as one or more second devices. The method illustrated in FIG. 5 may be applied to the communication system described above, or may be applied to future communication systems.

For example, when the method illustrated in FIG. 5 is applied to the communication system illustrated in FIG. 1, the first device may be an NWDAF network element in FIG. 1, and the second device may be an SMF network element, a UPF network element, an AMF network element, or the like in FIG. 1. It should be noted that one or more second devices may serve the same group of users, thereby ensuring consistency of sample spaces across different domains.

The method illustrated in FIG. 5 may include an operation S510. The method provided by the embodiment of the present disclosure will be described below from the perspective of interaction between the first device and one or more second devices.

In S510, the first device transmits a first request to one or more second devices. Alternatively, the one or more second devices receive the first request from the first device.

Operation S510 may be replaced by the second device receiving the first request transmitted by the first device. It should be noted that the second device mentioned herein may be any one of the one or more second devices participating in model training.

The first request may be used to request the one or more second devices to train a model associated with a first service. In some embodiments, the first request may include a model training identifier, which may indicate that the first request is for requesting the one or more second devices to perform model training. The model associated with the first service may also be referred to as a model corresponding to the first service, such as a model for executing the first service, or a model whose inference results may be used for processing the first service. The first service mentioned here may be, for example, a signaling storm analysis service, a connection establishment information analysis service, or the like.

The first request may also be referred to as a model training request. The first request may include one or more of: an initial model; a respective data feature associated with each of the one or more second devices; a training time of the model associated with the first service; a geographic area to which the data feature is associated; a service identifier of the first service; a training task identifier; or a type of model training.

In some embodiments, the first request may include an initial model, i.e., the initial model may be issued through the first request. The initial model can be used for model training. In other words, the initial model is associated with a model to be trained, or the initial model is an initial model associated with the first service.

In some embodiments, the initial models corresponding to multiple nodes, such as multiple second devices, participating in the training of the model associated with the first service may be the same or different. The respective initial model of each second device may be determined based on usage requirements, and the present disclosure does not limit this.

In some embodiments, the first request may indicate an identifier of the initial model. If the initial model is stored locally on the device participating in the model training, or on a node having a storage function in the communication system, before model training, the device participating in the model training, such as one or more second devices, may locally look up the corresponding initial model based on the model identifier, or download the corresponding initial model from the node having a storage function.

In some embodiments, the first request may include data features needed for model training. Data associated with a data feature may refer to a type of user data. For example, the connection establishment information of the terminal device, the user plane packet information of the terminal device, the mobility management information of the terminal device, the session management information of the terminal device, the policy information associated with the terminal device, and the subscription information associated with the terminal device described above each constitutes a type of data characterized by a respective data feature. In another example, the data feature may further include a data sample identifier, such as a terminal device ID, and a correspondence between the sample and the data feature.

In order to generate a model that better meets the needs of users, the training of the model requires user data from more dimensions. Accordingly, the first request may include multiple data features needed for model training to improve the accuracy of the model. One of the data features mentioned here may correspond to the data of one dimension for model training.

As mentioned earlier, a single device, such as a single network element, can often only provide data with a single feature. Correspondingly, multiple data features required for model training often need to be provided by multiple participants, such as multiple second devices. Accordingly, the first request may further include a respective data feature associated with each of the one or more second devices, or the first request may indicate an association between the multiple data features and the multiple second devices, i.e., the first request may indicate a respective data feature that each of the second devices needs to collect separately.

In some embodiments, the first request may include a training time of the model associated with the first service, to request one or more second devices to train the model within the training time. The training time facilitates service scheduling by one or more second devices, and the training time facilitates model training by multiple second devices in collaboration.

In some embodiments, the first request may include a geographic area to which the data feature is associated. The terminal devices may have different features in different geographical areas. Different services or different model training tasks of the same type of service may need to acquire features from different geographical areas. Therefore, the first request including a geographical area associated with the data feature may indicate an association between data features to be collected by the second device and geographical areas.

In some embodiments, the first request may include a service identifier of the first service. When there is model training of multiple services, information of model training corresponding to different services can be distinguished by the service identifiers.

The same service may include multiple model training tasks. For example, the signaling storm service may include two model training tasks, and different model training tasks may be designed for different model usage scenarios. Therefore, in order to further distinguish different model training tasks for the same service, the first request may include a training task identifier.

In some embodiments, the first request may further include a type of model training, such as model training based on a horizontal federated learning architecture.

In some embodiments, the method illustrated in FIG. 5 may further include an operation S520. In S520, the first device receives one or more training results transmitted by the one or more second devices, or the second device transmits the training result to the first device.

The one or more training results may be obtained by the one or more second devices training the model associated with the first service based on their local data. The local data may be, for example, data collected by the one or more second devices based on data features.

In some embodiments, the method illustrated in FIG. 5 may further include an operation S530. In S530, the first device transmits a loss parameter to the one or more second devices, or the second device receives the loss parameter transmitted by the first device.

The above loss parameter can also be referred to as a loss function, which can reflect the performance of the model. The loss parameter may be determined based on the one or more training results. For example, the first device may aggregate the one or more training results and compute the loss function based on the one or more training results using a label stored in the first device.

In some embodiments, the loss parameter may be used for the one or more second devices to update the model associated with the first service. For example, the one or more second devices may determine their loss statuses based on the loss function, compute gradients, and then update the model based on the loss statuses and the gradients. Typically, before updating the model, the first device may transmit a computation result of the loss parameter to the one or more second devices, or the second device may receive the computation result of the loss parameter transmitted by the first device.

It should be noted that the one or more training results may further include a training task identifier so that the first device can identify the training results associated with the same training task, thereby helping the first device to process the training results of the same task, such as aggregating the training results, computing a loss parameter, and the like.

After updating the model, the one or more second devices may continue to perform model training based on the local data until either a preset condition is satisfied or the model converges, at which point the model training is completed. The preset condition may be associated, for example, with a preset number of model training rounds. Whether the model converges may be determined based on the loss parameter, such as based on a relationship between the loss parameter and a preset threshold.

In some embodiments, the first device may transmit first indication information to the one or more second devices, where the first indication information indicates that the training of the model associated with the first service is completed. For example, the first indication information may be determined based on the preset number of model training rounds and/or loss parameter. For another example, when a number of model training rounds reaches the preset number of model training rounds, or when the loss parameter is less than or equal to a preset threshold, the first device transmits the first indication information to the one or more second devices.

In some embodiments, the preset number of training rounds may be carried in the first request to save signaling overhead.

Before performing model training, the initiator of the model training, such as the first device, usually needs to determine or discover participants of the model training, that is, the one or more second devices participating in this model training.

In some embodiments, the first device may transmit a second request to a third device before the first device transmits the first request to the one or more second devices. The third device may be a device storing device information, such as an NRF network element, and the device information mentioned herein may be, for example, capability information of the device, such as information associated with a model inference/training capability of the device.

The second request may be used to discover a fourth device. The fourth device is a device having a model training capability, and the model training capability is a capability to train the model associated with the first service.

In some embodiments, the second request may include a capability requirement for training the model associated with the first service to determine devices that may participate in the training of the model associated with the first service. For example, the second request may include one or more of the following: a type of model training, a service identifier of the first service, a data feature associated with the first service, or a geographic area associated with the data feature. The type of model training may include model training based on horizontal federated learning.

In some embodiments, the second request may include a training time of the model associated with the first service. Since a device having the training capability of the model associated with the first service may not be able to allocate resources for model training when the communication service is busy, the training time of the model associated with the first service helps to improve a reliability of determining the participant of the current model training.

In some embodiments, the third device may indicate to the first device a device that complies with the second request, such as a fourth device. For example, the first device may receive a response message sent by the third device. The response message is used to indicate the fourth device. The response message is a response message to the second request.

In some embodiments, the response message to the second request may indicate the fourth device through a device identifier or a device address. In some cases, the fourth device may perform model training by deploying a client that supports model inference/training, or by interacting with a client that has a model inference/training capability. Accordingly, the response message may also indicate an address of a client associated with the fourth device. The client associated with the fourth device may refer to the client deployed in the fourth device that supports model inference/training, or the client having the model inference/training capability that can interact with the fourth device.

In some embodiments, the first device may determine a device participating in the current model training, that is, a device participating in the training of the model associated with the first service, based on discovered fourth devices. For example, the one or more second devices may be some or all of the fourth devices.

There are several methods for determining the one or more second devices. For example, the first device may randomly determine one or more second devices from the fourth devices. As another example, the first device may determine one or more second devices based on device information, such as local information, of the fourth devices.

As an example, the first device may send a model training execution request to the fourth device. The model training execution request may include one or more of: a type of model training; a service identifier of the first service; a data feature associated with the first service; a training time of the model associated with the first service; or a geographic area to which the data feature is associated.

The fourth device may determine, based on local information, whether it can complete the model training required by the model training execution request. For example, the fourth device may determine whether the model training can be completed under the requirements of the above-described model training execution request, based on one or more of the following: a number of services currently or within the model training time, resource usage situation, remaining resource situation, data amount of the local data, or a data feature corresponding to the local data. As an example, the fourth device cannot complete the model training when there are a large number of services within the model training time or when remaining resources are scarce. As another example, when the amount of local data corresponding to the data feature associated with the model training execution request is small, the fourth device cannot complete the model training.

As an example, the fourth device may send a response message to the model training execution request to the first device. The response message may indicate whether the fourth device supports the current model training associated with the first service, or whether the fourth device can participate in the current model training associated with the first service. The response message may be determined based on a determination result of whether the fourth device can complete the model training.

As another example, if the fourth device can complete the model training required by the model training execution request, the fourth device sends the response message to the first device. The response message may indicate that the fourth device can complete the model training required by the model training execution request. If the fourth device cannot complete the model training required by the model training execution request, the fourth device does not send a response message to the first device, thereby helping to save signaling resources.

In some embodiments, the second device may register its capability information with the third device. The capability information may be associated with the model inference/training capability of the second device. For example, the capability information may include one or more of the following: whether a model training/inference capability is available; a type of model training/inference supported; a service supported for model training/inference; a data feature supported for collection; a time period supported for model training/inference; or a geographic area that supports model training/inference.

In some embodiments, the second device may be an AI-enabled device. For example, the second device may be a gNB or a terminal device, that is, the second device has a model inference/training capability. Since an OAM includes a management data analytics function (MDAF), this network element also has AI capabilities. In other words, the second device may be an OAM. As another example, the second device may be a device in which a client that supports model inference/training is deployed. As an example, the second device may be a network element with a client that supports model inference/training, such as an NWDAF client, deployed. As another example, the second device may be a device that supports interaction with a client having a model inference/training capability. As an example, the second device may be an NF having an internal interface with the NWDAF client, that is, the second device may be an NF that interacts with the NWDAF client through the internal interface.

In some embodiments, the first device may store device information of the one or more second devices for subsequent use. For example, the first device may also store device information of the one or more second devices, and a service identifier of the first service associated with the one or more second devices. The stored device information of the one or more second devices, and/or the service identifier of the first service associated with the one or more second devices may be used for model inference associated with the first service, or for other model training tasks associated with the first service.

From the previous introduction, it can be seen that the model training by combining data with different features of the same user across various nodes is helpful to improve the performance of the model. However, multi-node and multi-domain data sharing will bring great challenges to data privacy. Taking the network architecture of the communication system illustrated in FIG. 1 as an example, there are multiple nodes and network elements in the communication system, and each network element has its own specific function and contains specific data and information. However, because different network elements may come from different manufacturers during actual deployment, different manufacturers cannot share their own data for security and privacy reasons. Therefore, the initiator of model training, such as the analysis network element in the network, cannot collect user data with different features, and thus cannot implement model training based on user data with different features.

The vertical federated learning architecture mentioned above can allow an artificial intelligence system to efficiently and accurately use multi-node local data while meeting data privacy, security and regulatory requirements, and break down data silos, thereby achieving cross-domain multi-node data sharing while ensuring privacy and security.

Therefore, in order to solve the problem of data security in the multi-node data sharing process, the embodiments of the present disclosure introduce a vertical federated learning architecture into the communication system. For example, the aforementioned first request may be used to request the one or more second devices to train the model associated with the first service based on vertical federated learning. Based on this, the types of model training mentioned above may also include model training based on vertical federated learning.

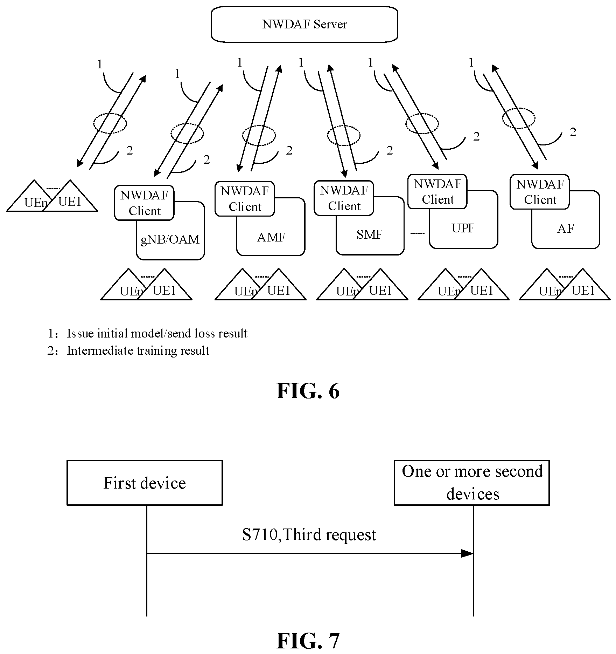

FIG. 6 is a diagram illustrating an application example of a vertical federated learning architecture in a communication system. The initiator of the model training in FIG. 6 is an NWDAF server, and the participants of the model training include a UE, a gNB, an OAM network element, an AMF network element, an SMF network element, a UPF network element, an AF network element, and the like.

In the model training process based on the vertical federated learning architecture illustrated in Figure 6, first, the NWDAF server (i.e., the initiator of the model training) determines different network element nodes that need to participate in this model training. It should be noted that the participants selected by the initiator should serve the same group of terminal devices, thus helping to ensure the consistency of sample spaces across various domains.

In some embodiments, the NWDAF server may send a respective initial sub-model to each node, where sub-models of the network elements may be the same or different.

In some embodiments, the NWDAF server may indicate a respective data feature associated with each node (i.e., the participating nodes of the model training), that is, it can indicate to each node the respective data feature that need to be collected.

In some embodiments, the NWDAF may send a model training task ID to each node. After receiving the results from the nodes, the NWDAF server can identify training results of the same model training task based on the model training task ID. Further, the NWDAF server may aggregate the training results of the same model training task and compute a loss function.

In some embodiments, each node may perform local data collection according to the received initial model and the data feature indicated by the NWDAF server to be collected. Each node can perform model training based on the collection result of local data, and send the training result (which can also be referred to as intermediate result of model training) to the NWDAF server.

In some embodiments, the NWDAF server may aggregate the training results of the nodes, and compute a loss function using its own stored label. In addition, the NWDAF server can send a loss status, such as the computation result of the loss function, to each node.

In some embodiments, each node may compute gradient information according to the loss status, and update a local model (such as the initial model mentioned above) according to the loss status and the gradient information.

In some embodiments, multiple rounds of model training may be performed based on data from each node. The model training is terminated in response to model convergence or reaching the preset number of model training rounds. The model convergence mentioned herein may mean that the loss function of the model is less than a preset threshold.

It should be noted that in a 5G communication system (such as the communication system illustrated in FIG. 1), each NFx can implement local AI capabilities by deploying an NWDAF client, so that it can serve as an initiator or participant in model training. The NWDAF client can be integrated into the NF, or the NWDAF client can also be deployed separately. When the NWDAF client is deployed separately, the NF may interact with the NWDAF client through an internal interface. In addition, in 6G or future communication systems, a node that is designed with AI capabilities from the outset, such as a node with AI capabilities using endogenous intelligence, can become an initiator or participant in model training. The present disclosure is not limited thereto.

The above describes a method for model training based on multi-dimensional data features of users. The following section will introduce a method for wireless communication provided by another embodiment of the present disclosure with reference to FIG. 7. The method illustrated in Figure 7 helps to improve the accuracy of model inference results by performing model inference based on the user's multi-dimensional data features.

The method illustrated in FIG. 7 may be applied to the communication system described above, or may be applied to future communication systems. For example, when the method illustrated in FIG. 7 is applied to the communication system illustrated in FIG. 1, the first device may be an NWDAF network element in FIG. 1, and the second device may be an SMF network element, a UPF network element, an AMF network element, a UPF network element, a PCF network element, a UDM network element, a terminal device, or the like in FIG. 1.

The method illustrated in FIG. 7 involves an initiator of model inference, such as a first device, and a participant of the model inference, such as one or more second devices. The method illustrated in FIG. 7 may include an operation S710. The method provided by the embodiment of the present disclosure will be described below from the perspective of interaction between the first device and the one or more second devices.

In S710, the first device transmits a third request to the one or more second devices. Alternatively, the one or more second devices receive the third request sent by the first device.

Operation S710 may be replaced by the second device receiving the third request transmitted by the first device. It should be noted that the second device mentioned herein may be any one of the one or more second devices participating in model inference.

The third request described above may be used to request the one or more second devices to perform model inference associated with a first service. In some embodiments, the third request may include a model inference identifier, which may indicate that the third request is for requesting the one or more second devices to perform model inference. The model inference associated with the first service may mean that a result of the model inference may be used to process the first service.

In some embodiments, the third request may include one or more of the following: a service identifier of the first service; an inference task identifier; a respective data feature associated with each of the one or more second devices; a time period associated with the first service; a geographic area associated with the first service; a target terminal device associated with the first service; or a model identifier associated with the first service.

Before performing model inference, the second device needs to determine a target model, i.e., a model to be inferred.

In some embodiments, the second device may determine the target model based on the model identifier. For example, the third request may include the model identifier associated with the first service, and the second device may determine the target model based on the model identifier associated with the first service.

In some embodiments, the second device may determine the target model based on the identifier of the first service. For example, the third request may include the service identifier of the first service. Since the service identifier usually has a mapping relationship with the model identifier, the second device may determine the target model based on the service identifier of the first service and the mapping relationship. Here, the mapping relationship between the service identifier and the model identifier may be stored locally in the second device or may be acquired by the second device from the first device, and the present disclosure does not limit this.

The same service may correspond to different model inference tasks, for example, the signaling storm analysis service may include a model inference task associated with a signaling storm in a first period and a model inference task associated with a signaling storm in a second period. Therefore, in order to distinguish different model inference tasks of the same service, the third request may include an inference task identifier. In addition, the inference task identifier can also be used to distinguish inference results of different model inference tasks.

During model inference, different second devices need to collect local data with different data features, or in different model inference tasks, the same second device needs to collect local data with different data features. Accordingly, the third request may also include data features associated with the one or more second devices to indicate a respective type of local data that each second device needs to collect. Data associated with a data feature may refer to a type of user data. For example, the connection establishment information of the terminal device, the user plane packet information of the terminal device, the mobility management information of the terminal device, the session management information of the terminal device, the policy information associated with the terminal device, and the subscription information associated with the terminal device described above each constitutes data associated with a respective type of data feature.

In some embodiments, the third request may further include a data sample identifier, such as a terminal device ID, and correspondences between samples and data features. For example, when data sample identifiers included in the third request are UE1 to UEn, the participants in the model inference need to collect data of UE1 to UEn. For another example, the third request indicates a data feature 1 corresponding to UE1 to UEm and a data feature 2 corresponding to UEm+1 to UEn, that is, the participants in the model inference needs to collect data associated with the data feature 1 of the UE1 to UEm and data associated with the data feature 2 of the UEm+1 to UEn.

As an example, the data feature may include a sample identifier and correspondences between samples and data features. That is, the third request may indicate, through the data feature, the data sample identifier and/or the correspondences between the samples and the data features.

In some embodiments, the third request may include one or more of the following: a time period associated with the first service, a geographical area associated with the first service, or a target terminal device associated with the first service. The target terminal device is a terminal device associated with the first service, such as a terminal device corresponding to the sample identifier.

In some embodiments, the first device may receive one or more inference results transmitted by the one or more second devices, or the second device may transmit the inference result to the first device. The one or more inference results are obtained by the one or more second devices performing inference on the model associated with the first service based on local data.

The local data may be collected by the one or more second devices based on data features associated with the first service. Taking the first service as a signaling storm analysis service as an example, the local data may include one or more of the following: mobility management information of the target terminal device; session management information of the target terminal device; user plane packet information of the target terminal device; policy information associated with the target terminal device; or subscription information associated with the target terminal device. The target terminal device is a terminal device associated with the first service, such as a terminal device corresponding to the sample identifier.

The policy information associated with the target terminal device may include, for example, a routing policy, a mobility management policy, a session management policy, a billing policy and the like of the terminal device.

In some embodiments, the mobility management information of the target terminal device may be collected by an AMF network element as a second device. The mobility management information of the target terminal device may include, for example, one or more of the following: a number of terminal devices registered with the AMF and a number of signaling generated; a type of initiated registration, such as initial registration, periodic registration update, and mobility registration update; a number of terminal devices successfully registered and a number of signaling generated; a number of terminal devices whose registration failed and a number of signaling generated; or a number of terminal devices served by the AMF network element, such as a number of terminal devices supported by the AMF network element.

In some embodiments, the session management information of the target terminal device may be collected by an SMF network element as a second device. The session management information of the target terminal device may include one or more of the following: a number of terminal devices that make a session request to the SMF network element and a number of signaling generated; a session request type, such as initial session establishment, session modification, session release, etc.; a number of terminal devices that successfully established sessions and a number of signaling generated; a number of terminal devices whose session establishment failed and a number of signaling generated; or a number of terminal devices served by the SMF network element, such as a number of terminal devices supported by the SMF network element.

In some embodiments, the user plane packet information of the target terminal device may be collected by an UPF network element as a second device. The user plane packet information of the target terminal device includes one or more of the following: a number of data packets forwarded by the UPF network element; or a number of N4 session establishment requests exchanged between the UPF network element and the SMF network element.

In some embodiments, the routing policy of the target terminal device may be collected by the target terminal device as a second device. The routing policy of the target terminal device may be used for the terminal device to determine whether an application can be associated with an established PDU session or whether an establishment of a new PDU session needs to be triggered.

In some embodiments, other policies of the target terminal device, such as a mobility management policy, a session management policy, and a billing policy, may be collected by the PCF network element as a second device. Other policy information of the target terminal device may include a number of policies provided by the PCF network element and a number of signaling generated.

In some embodiments, the subscription information associated with the target terminal device may be collected by an UDM network element as a second device. The subscription information associated with the target terminal device may include, for example, a number of signaling (messages) generated by interaction between the UDM network element and other network elements, such as a number of signaling generated by any network element interacting with the UDM network element due to any procedure. As an example, the subscription information associated with the target terminal device may include a number of signaling for user subscription registration with the UDM network element, or may include a number of signaling generated by the AMF network element and the SMF network element querying the UDM network element for subscription information in order to perform procedures such as registration and session establishment.

In some embodiments, the local data of the target terminal device may further include location information of the terminal device. The location information may be used to determine whether the terminal device will enter or leave a certain area in a certain period of time in the future.

It should be noted that the above-mentioned local data may be local data generated within a geographical area associated with the first service and/or a time period associated with the first service.

In some embodiments, the one or more inference results may include an inference task identifier, thereby facilitating the terminal device to process inference results of the same inference task, such as aggregating the inference results.

The first device may obtain an analysis result associated with the first service based on the one or more inference results. In some embodiments, the first device may transmit the analysis result associated with the first service to a fifth device. The fifth device mentioned herein may be a device that subscribes to the first service, such as a terminal device or one or more second devices.

The analysis result associated with the first service may include multiple types of information. Taking the first service as a signaling storm as an example, a content of the analysis result associated with the first service will be described below.

In some embodiments, the analysis result associated with the first service may include a signaling storm level, such as three levels of low level, medium level, and high level. According to the signaling storm level in the analysis result, it is possible to know the signaling situation within a target time period, determine the timing for adjusting or updating a signaling-related policy, and determine an adjustment scheme for the signaling-related policy. For example, when a level of the signaling storm is medium or higher, the signaling-related policy is adjusted or updated, and when the level of the signaling storm is low, the signaling-related policy is not adjusted. In another example, different policy adjustment schemes may be adopted according to different signaling storm levels, for example, when the signaling storm level is medium, only signaling requests with higher importance are executed; when the signaling storm level is high, connection establishment is not performed, registration request is not accepted, or the like.

In some embodiments, the analysis result associated with the first service may include a node that generates a signaling storm and/or a proportion of influence of the node that generated the signaling storm on the signaling storm, thereby facilitating targeted adjustment to the signaling-related policy and improving the effectiveness of the policy adjustment scheme. In an example, when the node generating the signaling storm is an AMF network element, the signaling-related policy for the AMF network element can be adjusted, such as not accepting (i.e., rejecting) a registration request, so as to reduce a number of signaling of the AMF network element, thereby helping to avoid the signaling storm. In another example, during the generation of a signaling storm, an influence proportion of an AMF network element is 80%, an influence proportion of an SMF network element is 10%, and an influence proportion of an UDM network element is 10%, and then a signaling-related policy for each of the network elements can be adjusted according to a respective different influence proportion. In an example, a degree of policy adjustment for each node is determined based on a respective different influence proportion. For example, for a node with a large influence proportion, an action related to signaling may not be performed, while for a node with a small influence proportion, an action related to signaling with a lower importance may not be performed. In another example, a signaling-related policy adjustment may be performed on a node with a large influence proportion, while no signaling-related policy adjustment is performed on a node with a small influence proportion.

In some embodiments, the analysis result associated with the first service may include a cause of the signaling storm. The cause of the signaling storm may include, for example, a movement of a large number of users. Because of the movement of the large number of users, the large number of users will handover, register or establish connections at the same time, which causes a network node to receive a large number of signaling requests at the same time, thereby generating the signaling storm.

In some embodiments, the analysis result associated with the first service may include a terminal device that may be affected by the signaling storm. Based on information about the terminal device that will be affected by the signaling storm, the signaling strategy of the terminal device can be adjusted to help avoid the influence of the signaling storm.

In some embodiments, the analysis result associated with the first service may include a recovery time of the signaling storm or duration of the signaling storm, thereby facilitating the adjustment to the signaling policy within the duration of the signaling storm.

The analysis result associated with the first service may include one or more of the above contents.

The analysis result associated with the first service may be used to determine a signaling-related policy in the fifth device, such as an adjustment scheme of the signaling policy mentioned above, or an updated policy. Taking the fifth device as a terminal device as an example, the signaling-related policy may include not initiating a registration request and/or not initiating a connection establishment during a signaling storm. Taking the fifth device as a core network element as an example, the signaling-related policy may include rejecting a signaling request and/or deploying a backup fifth device during a signaling storm.

When the signaling storm disappears or is recovered, the fifth device may restore or update the signaling-related policy to a policy in effect before the signaling storm occurred.

In the embodiment of the present disclosure, the policy associated with the first service may be adjusted based on the inference result of the model associated with the first service, for example, the policy associated with the signaling may be adjusted based on the analysis result of the signaling storm service, thereby helping to avoid network paralysis caused by the signaling storm and helping to avoid the impact of the signaling storm on the user experience.

In some embodiments, before performing model inference associated with the first service, such as before the first device transmits the third request to the one or more second devices, the first device may receive first information transmitted by the fifth device. The first information may be used to subscribe to the first service, the first service being associated with model inference of the one or more second devices.

In some embodiments, the first information may include one or more of the following: a service identifier of the first service; an inference task identifier; a time period associated with the first service; a geographic area associated with the first service; a target terminal device associated with the first service; or a model identifier associated with the first service.

The first information may indicate a target model for which model inference is to be performed through a service identifier of the first service or a model identifier associated with the first service. The service identifier of the first service may have a mapping relationship with the target model.

In some embodiments, the target terminal devices may include all terminal devices, or some terminal devices, or a certain terminal device within the geographical area associated with the first service. For example, the target terminal device associated with the first service may be indicated through one or more of the following: a terminal device list, a terminal device group, or a terminal device identifier.

Upon receiving the third request, the first device needs to determine one or more second devices that participate in model inference associated with the first service. For example, the one or more second devices may be determined based on second information stored in advance by the first device. The second information may be information about devices that have historically participated in model training associated with the first service. As another example, the determination may be based on a model training result associated with the first service. As an example, if there is no pre-stored second information in the first device, or the first device has not initiated model training associated with the first service, the first device may train the model associated with the first service, and determine the first or more second devices based on the training result.

In some embodiments, the second device may be an AI-enabled device. For example, the second device may be a gNB or a terminal device, that is, the second device has a model inference/training capability. Since an OAM includes a management data analytics function (MDAF), this network element also has AI capabilities. That is, the second device may be an OAM. As another example, the second device may be a device in which a client that supports model inference/training is deployed. As an example, the second device may be a network element with a client that supports model inference/training, such as an NWDAF client, deployed. As another example, the second device may be a device that supports interaction with a client having a model inference/training capability. As an example, the second device may be an NF having an internal interface with the NWDAF client, that is, the second device may be an NF that may interact with the NWDAF client through the internal interface.

The method provided by the embodiment of the present disclosure can realize more comprehensive model inference through multi-dimensional data features (such as data associated with multiple data features provided by multiple second devices), thereby improving the accuracy of model inference results.

In some embodiments, the third request is to request the one or more second devices to perform model inference associated with the first service based on a vertical federated learning architecture. That is, the model inference method associated with the first service provided by the embodiment of the present disclosure may be a model inference method based on a vertical federated learning architecture. Since the vertical federated learning architecture can allow artificial intelligence systems to efficiently and accurately use local data from multiple nodes while meeting data privacy, security and regulatory requirements, model inference based on the vertical federated learning architecture can break down data isolation between different device venders and solve the problem of data security during multi-node data sharing.

It should be noted that the two wireless communication methods provided in the embodiments of the present disclosure may be used independently of each other or in combination. That is, the model training method and the model inference method provided by the embodiments of the present disclosure may be used independently of each other or may be used in combination. For example, when a service subscription request is received, a model training associated with the service may be executed based on the model training method provided by the embodiment of the present disclosure, and then model inference associated with the service may be executed based on a model training result and the model inference method provided by the embodiment of the present disclosure.

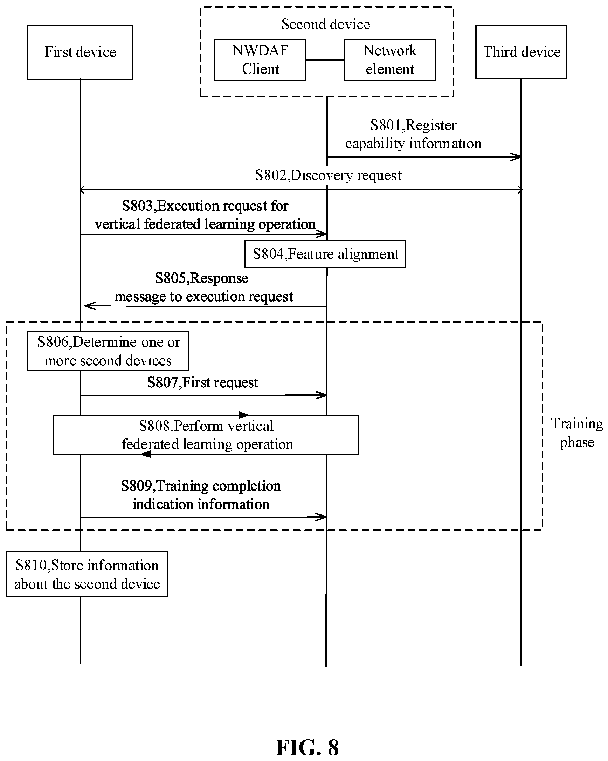

A model training process based on the vertical federated learning architecture is introduced below in conjunction with FIG. 8. An initiator of model training illustrated in FIG. 8 is an NWDAF server, that is, a first device, and a participant in the model training is an NF co-located with the NWDAF client, that is, a second device. In addition, the model training process illustrated in FIG. 8 also involves an NRF network element, that is, a third device, for storing or registering capability information of the NF.

The method illustrated in FIG. 8 includes operations S801 to S810.

In S801, the second device registers capability information with a third device.

For example, the capability information may include whether the second device supports operations based on vertical federated learning, such as model training based on vertical federated learning, and/or model inference based on vertical federated learning. As another example, the capability information may include a service X supported by the second device to perform vertical federated learning operations and local data features supported by the second device. For another example, the capability information may further include a valid period of time during which the second device supports vertical federated learning operations.

In S802, the first device transmits a discovery request to the third device.

The discovery request is used to discover a second device through the third device, that is, to discover a second device supporting a service X (such as the first service mentioned above). The discovery request may indicate a vertical federated learning operation, and the service X.

In response to the discovery request, the third device may return device information satisfying the discovery request, such as an address of the second device, or an address of a client co-located with the second device, to the first device.

In S803, the first device may transmit an execution request for the vertical federated learning operation to the second device. For example, the execution request may include model training based on the vertical federated learning. In another example, the execution request may indicate a data feature that is required to be collected by the second device, a time for performing the vertical federated learning operation; an area for the vertical federated learning operation, etc.

In S804, the second device performs feature alignment, or the second device determines whether the vertical federated learning operation can be performed.

For example, the second device may determine, based on local information, whether a data feature satisfying a condition can be collected within the time and area required by the execution request, and perform the vertical federated learning operation.

In S805, the second device transmits a response message to the execution request to the first device. The response message indicates that the second device can support the vertical federated learning operation.

In S806, the first device determines one or more second devices participating in the vertical federated learning operation.

For example, the first device may determine the one or more second devices participating in the current vertical federated learning operation based on the response message to the execution request.

In S807, the first device transmits a first request to the second device.

The first request may be used to request the second device to perform the vertical federated learning operation. For example, the first request may include one or more of the following: an initial model associated with the service X; a model training identifier; a training task identifier (which may also be referred to as an association identifier); a data feature.

In S808, the vertical federated learning operation such as model training is performed.

Taking model training as an example, the second device can collect local data according to the received initial model and the data feature to be collected, and train the model based on a result of local data collection. Second devices may send intermediate results of model training to the first device, and the first device may aggregate the results from the second devices and compute a loss function using its own stored label. Further, the first device may transmit a loss status to each of the second devices, so that the second device can compute a gradient and update the model according to the received loss status.

It should be noted that the operation S808 may be executed once or multiple times during a model training procedure.

In S809, the first device transmits training completion indication information to the second device.

For example, the first device may determine whether the model converges according to the loss function, and when the model converges, the first device transmits the training completion indication information to the second device. As another example, when a preset number of training rounds is reached, the first device may send the training completion indication information to the second device.

The model training procedure terminates when the second device receives the training completion indication information.

In S810, the first device stores information about the second device.

For example, the first device may store information about the second device participating in the current vertical federated learning operation, and a mapping relationship between the second device and the first service associated with the current vertical federated learning operation. When the vertical federated learning operation associated with the first service is subsequently executed, the information about the second device can be directly acquired, which is convenient to use.

In some embodiments, the NWDAF server may also interact with the gNB, the OAM, or the terminal device, i.e., the gNB, the OAM, or the terminal device may also act as a participant in the vertical federated learning operation. Since the terminal device and gNB themselves can have certain AI capabilities, there is no need to deploy an NWDAF client. The OAM includes an MDAF (which has AI capabilities), so the NWDAF server can interact with the MDAF to perform the vertical federated learning operation.

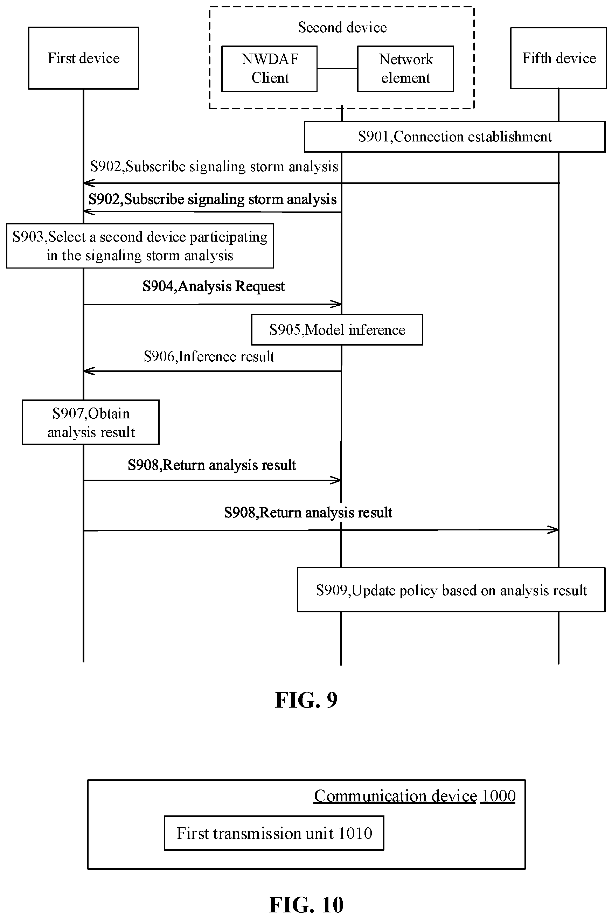

With the surge in various extreme mobility scenarios, such as rush-hour subways and unexpected network failures, signaling storms can be triggered. Hereinafter, combined with FIG. 9, a model inference procedure based on a vertical federated learning architecture is introduced by taking a first service as signaling storm analysis as an example. An initiator of the model training illustrated in FIG. 9 is an NWDAF server, that is, a first device, and a participant in the model training is an NF re-located with a NWDAF client, that is, a second device. In addition, the model inference procedure illustrated in FIG. 9 also involves a subscribing device of the signaling storm, that is, a fifth device, such as a terminal device.

The method illustrated in FIG. 9 includes operations S901 to S909.

In S901, the terminal device and the second device perform connection establishment.

Because a connection establishment process has occurred between the terminal device and the core network, the core network has historical data needed to determine the signaling storm.

In S902, the fifth device subscribes to a signaling storm analysis from the first device. The fifth device may be a second device or a terminal device.

A subscription message may include, for example, a service identifier (i.e., a signaling storm identifier), an analysis time period and an area in which the signaling storm occurs, and an analysis target (i.e., a target terminal device). The target terminal device may include all or part of terminal devices in the area. If the target terminal device includes multiple terminal devices, the target terminal device may be represented by a terminal device list or a terminal device group. If the target terminal device includes one terminal device, the target terminal device may be represented by a terminal device identifier.

In S903, the first device selects a second device participating in the signaling storm analysis.

If information about a second device supporting signaling storm analysis is stored in the first device, the first device determines the second device participating in the signaling storm analysis based on the information. If no information about the second device supporting the signaling storm analysis is stored in the first device, for example, the first device has not performed model training for the signaling storm analysis, the first device may perform model training according to the method illustrated in FIG. 8, and then determine the second device participating in the signaling storm analysis based on the training result.

In S904, the first device transmits an analysis request to the second device.

The analysis request may include, for example, an inference task identifier (which may also be referred to as an association identifier); a service identifier; a data feature that needs to be collected; a time period during which the analysis needs to be performed; a geographical area or location that needs to be analyzed, and a terminal device that needs to be analyzed for signaling storms.

In S905, the second device performs model inference, for example, the second device performs model inference based on local data. The second device may perform model inference according to the content of the analysis request.

In S906, the second device transmits an intermediate inference result to the first device. The intermediate inference result may further include an inference task ID.

In S907, the first device acquires an analysis result. For example, the first device may obtain the analysis result of the signaling storm by aggregating the intermediate inference results transmitted by second devices.

In S908, the first device returns the analysis result to the fifth device, that is, the subscription device for the signaling storm analysis.

In S909, the fifth device updates the policy according to the analysis result. The policy mentioned herein may be a signaling-related policy.

The fifth device, such as the terminal device, may not perform registration request or connection establishment after receiving the analysis result of the signaling storm. Accordingly, after the signaling storm disappears, the registration request and the connection establishment will be resumed. The fifth device, such as the second device, i.e., the core network element, may reject certain signaling requests during or before the signaling storm is generated, or temporarily deploy a backup network element to expand the load capacity of the network, thereby avoiding paralysis of the network due to the signaling storm.

In some embodiments, the local data mentioned in the above operation S905 may include mobility management information of the terminal device; session management information of the terminal device; user plane packet information of the terminal device; policy information associated with the terminal device; and subscription information associated with the terminal device.

The mobility management information of the terminal device may be collected by an AMF network element as a second device. The mobility management information of the terminal device may include, for example, one or more of the following: a number of terminal devices registered with the AMF and a number of signaling generated; a type of initiated registration, such as initial registration, periodic registration update, and mobility registration update; a number of terminal devices successfully registered and a number of signaling generated; a number of terminal devices whose registration failed and a number of signaling generated; or a number of terminal devices served by the AMF network element, such as a number of terminal devices supported by the AMF network element.

The session management information of the terminal device may be collected by an SMF network element as a second device. The session management information of the terminal device may include one or more of the following: a number of terminal devices that make a session request to the SMF network element and a number of signaling generated; a session request type, such as initial session establishment, session modification, session release, etc.; a number of terminal devices that successfully established sessions and a number of signaling generated; a number of terminal devices whose session establishment failed and a number of signaling generated; or a number of terminal devices served by the SMF network element, such as a number of terminal devices supported by the SMF network element.

The user plane packet information of the terminal device may be collected by an UPF network element as a second device. The user plane packet information of the terminal device includes one or more of the following: a number of data packets forwarded by the UPF network element; or a number of N4 session establishment requests exchanged between the UPF network element and the SMF network element.

The routing policy of the terminal device may be collected by the terminal device as a second device. The routing policy of the terminal device may be used for the terminal device to determine whether an application can be associated with an established PDU session or whether an establishment of a new PDU session needs to be triggered.

Other policies of the terminal device, such as a mobility management policy, a session management policy, a billing policy and other related policies, may be collected by a PCF network element as a second device. Other policy information of the terminal device may include a number of policies provided by the PCF network element and a number of signaling generated.

The subscription information associated with the terminal device may be collected by an UDM network element as a second device. The subscription information associated with the terminal device may include, for example, a number of signaling generated by interaction between the UDM network element and other network elements, such as a number of signaling generated by any network element interacting with the UDM network element due to any procedure. As an example, the subscription information associated with the terminal device may include a number of signaling for user subscription registration with the UDM network element, or may include a number of signaling generated by the AMF network element and the SMF network element querying the UDM network element for subscription information in order to perform procedures such as registration and session establishment.

The local data of the terminal device may further include location information of the terminal device. The location information may be used to determine whether the terminal device will enter or leave a certain area in a certain period of time in the future.

It should be noted that the above-mentioned local data may be local data generated within a geographical area associated with the first service and/or a time period associated with the first service.

In some embodiments, the analysis result mentioned in the above operation S907 may include a signaling storm level of the entire communication network, for example, including low, medium, and high. The analysis result may also include a node in the network that generates a signaling storm, such as an AMF network element. For example, the interaction between the terminal device and the AMF network element generates a large amount of signaling, which may lead to a signaling storm and network paralysis. The analysis result may also include a proportion of influence of the node that generated the signaling storm on the signaling storm. For example, in the generation of a signaling storm, an influence proportion of an AMF network element is 80%, an influence proportion of an SMF network element is 10%, and an influence proportion of an UDM network element is 10%. The analysis result may also include a cause of the signaling storm in the network, for example, due to the movement of a large number of users, the large number of user will handover, register, or establish connections at the same time, which will cause a network node to receive a large number of signaling requests at the same time, thereby generating the signaling storm. The analysis result may also include a terminal device affected by the signaling storm and a time when the signaling storm recovers or disappears.

It should be noted that the model inference/training mentioned in the embodiments of the present disclosure may refer to model inference or model training.

The method embodiments of the present disclosure are described in detail above with reference to FIG. 1 to FIG. 9, and device embodiments of the present disclosure are described in detail below with reference to FIG. 10 to FIG. 14. It should be understood that descriptions of the method embodiments and descriptions of the device embodiments correspond to each other, and therefore, any part not described in detail can be referred to the foregoing method embodiments.

FIG. 10 is a schematic diagram of a communication device according to an embodiment of the present disclosure. The communication device 1000 illustrated in FIG. 10 may be any of the first devices mentioned above, and the communication device 1000 may include a first transmission unit 1010.

The first transmission unit 1010 is configured to transmit a first request to one or more second devices, where the first request is used to request the one or more second devices to train a model associated with a first service.

In some embodiments, the first request includes one or more of: an initial model; a respective data feature associated with each of the one or more second devices; a training time of a model associated with the first service; a geographic region to which the data features are associated; a service identifier of the first service; a training task identifier; or a type of model training.

In some embodiments, the device further includes a first receiving unit configured to receive one or more training results transmitted by the one or more second devices. The one or more training results are obtained by the one or more second devices respectively train the model associated with the first service based on their local data.

In some embodiments, the respective local data of each second device is collected by the second device based on the respective data feature.

In some embodiments, the device further comprises a second transmission unit for transmitting a loss parameter to the one or more second devices, the loss parameter being determined based on the one or more training results.

In some embodiments, the loss parameter is used for the one or more second devices to update a model associated with the first service.

In some embodiments, the device further includes a third transmission unit configured to transmit first indication information to the one or more second devices. The first indication information indicates that training of the model associated with the first service is completed.

In some embodiments, the first indication information is determined based on a preset number of model training rounds and/or the loss parameter.

In some embodiments, the device further includes a fourth transmission unit configured to transmit a second request to a third device before the first device transmits the first request to the one or more second devices. The second request is used for discovering a fourth device. The fourth device is a device having a model training capability, and the model training capability is a capability to train a model associated with the first service.

In some embodiments, the second request includes one or more of: a type of model training; a service identifier of the first service; a data feature associated with the first service; a training time of a model associated with the first service; or a geographic area to which the data features are associated.

In some embodiments, the device further includes a second receiving unit configured to receive, from the third device, a response message to the second request, and the response message to the second request indicates the fourth device.

In some embodiments, the response message to the second request includes an address of the fourth device, and/or an address of a client associated with the fourth device.

In some embodiments, the one or more second devices are some or all of the fourth devices.

In some embodiments, the device further includes a storage unit for storing information about the one or more second devices.

In some embodiments, the second device is one or more of: a device having a model inference/training capability; a device with a client deployed that supports model inference/training; or a device that supports interaction with a client having a model inference/training capability.

In some embodiments, the first request is for requesting the one or more second devices to train the model associated with the first service based on vertical federated learning.

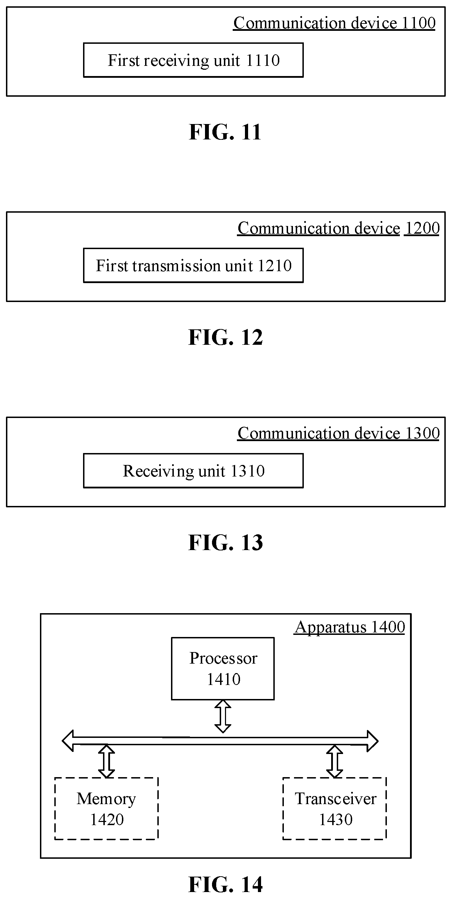

FIG. 11 is a schematic diagram of a communication device provided by another embodiment of the present disclosure. The communication device 1100 illustrated in FIG. 11 may be any of the aforementioned second devices, and the communication device 1100 may include a first receiving unit 1110.

The first receiving unit 1110 is configured to receive a first request sent by a first device. The first request is used to request the second device to train a model associated with a first service.

In some embodiments, the first request includes one or more of: an initial model; a data feature associated with the second device; a training time of a model associated with the first service; a geographic region to which the data features are associated; a service identifier of the first service; a training task identifier; or a type of model training.

In some embodiments, the device further includes a first transmission unit configured to transmit a training result to the first device. The training result is obtained by the second device training the model associated with the first service based on local data.

In some embodiments, the local data is data collected by the second device based on the data feature.

In some embodiments, the device further includes a second receiving unit configured to receive a loss parameter transmitted by the first device, and the loss parameter is determined based on the training result.

In some embodiments, the loss parameter is used for the second device to update a model associated with the first service.

In some embodiments, the device further includes a third receiving unit configured to receive first indication information transmitted by the first device. The first indication information indicates that training of the model associated with the first service is completed.

In some embodiments, the first indication information is determined based on a preset number of model training rounds and/or the loss parameter.

In some embodiments, the second device is one or more of: a device having a model inference/training capability; a device with a client deployed that supports model inference/training; or a device that supports interaction with a client having a model inference/training capability.

In some embodiments, the device further includes a registration unit configured to register capability information with the third device. The capability information is associated with the model inference/training capability of the second device.

In some embodiments, the capability information includes one or more of: whether the model training/inference capability is available; a service supported for model training/inference; a data feature supported for collection; a type of model training/inference supported; a time period supported for model training/inference; or a geographic area that supports model training/inference.

In some embodiments, the first request is for requesting the second device to train the model associated with the first service based on vertical federated learning.

FIG. 12 is a schematic diagram of a communication device provided by yet another embodiment of the present disclosure. The communication device 1200 illustrated in FIG. 12 may be any of the first devices mentioned above, and the communication device 1200 may include a first transmission unit 1210.

The first transmission unit 1210 is configured to transmit a third request to one or more second devices, and the third request is configured to request the one or more second devices to perform model inference associated with the first service.

In some embodiments, the third request includes one or more of: a service identifier of the first service; an inference task identifier; a respective data feature associated with each of the one or more second devices; a time period associated with the first service; a geographic area associated with the first service; a target terminal device associated with the first service; or a model identifier associated with the first service.

In some embodiments, the device further includes a first receiving unit configured to receive one or more inference results transmitted by the one or more second devices, and the one or more inference results are obtained by the one or more second devices performing the model inference on the model associated with the first service based on their local data.

In some embodiments, the first service is signaling storm analysis, and the local data includes one or more of: mobility management information of a target terminal device; session management information of the target terminal device; user plane packet information of the target terminal device; policy information associated with the target terminal device; or subscription information associated with the target terminal device. The target terminal device is a terminal device associated with the first service.

In some embodiments, the policy information associated with the target terminal device includes a routing policy of the target terminal device.

In some embodiments, the one or more inference results include an inference task identifier.

In some embodiments, the device further includes a second transmission unit configured to transmit an analysis result associated with the first service to a fifth device, and the analysis result is determined based on the one or more inference results.

In some embodiments, the first service is signaling storm analysis, and the analysis result includes one or more of the following: a signaling storm level; a node that generates the signaling storm; a proportion of influence of the node generating the signaling storm on the signaling storm; a cause of the signaling storm; a terminal device that may be affected by the signaling storm; or a recovery time of the signaling storm.

In some embodiments, the analysis result is used to determine a signaling-related policy in the fifth device.

In some embodiments, the signaling-related policy includes performing one or more of: no registration request is initiated; no connection establishment is initiated; rejecting the signaling request; or deploying a backup fifth device.

In some embodiments, the device further includes a second receiving unit configured to receive first information sent by the fifth device before the first device sends a third request to the one or more second devices. The first information is used for subscribing to a first service associated with model inference of the one or more second devices.

In some embodiments, the first information includes one or more of: a service identifier of the first service; an inference task identifier; a time period associated with the first service; a geographic area associated with the first service; a target terminal device associated with the first service; or a model identifier associated with the first service.

In some embodiments, the one or more second devices are determined based on second information pre-stored by the first device, or the one or more second devices are determined based on model training results associated with the first service. The second information includes information about devices participating in model training associated with the first service.

In some embodiments, the second device is one or more of: a device having a model inference/training capability; a device with a client deployed that supports model inference/training; or a device that supports interaction with a client having a model inference/training capability.

FIG. 13 is a schematic diagram of a communication device provided by still another embodiment of the present disclosure. The communication device 1300 illustrated in FIG. 13 may be any of the second devices mentioned above, and the communication device 1300 may include a receiving unit 1310.

The receiving unit 1310 is configured to receive a third request sent by the first device, and the third request is used to request the second device to perform model inference associated with the first service.

In some embodiments, the third request includes one or more of: a service identifier of the first service; an inference task identifier; a data feature associated with the second device; a time period associated with the first service; a geographic area associated with the first service; a target terminal device associated with the first service; or a model identifier associated with the first service.

In some embodiments, the device further includes a transmission unit configured to transmit an inference result to the first device. The inference result is a result of inference performed by the second device on the model associated with the first service based on local data.

In some embodiments, the first service is signaling storm analysis, and the local data includes one or more of: mobility management information of a target terminal device; session management information of the target terminal device; user plane packet information of the target terminal device; policy information associated with the target terminal device; or subscription information associated with the target terminal device. The target terminal device is a terminal device associated with the first service.

In some embodiments, the policy information associated with the target terminal device includes a routing policy of the target terminal device.

In some embodiments, the inference result includes an inference task identifier.

In some embodiments, the first service is signaling storm analysis, and the analysis result associated with the first service includes one or more of the following: a signaling storm level; a node that generates the signaling storm; a proportion of influence of the node generating the signaling storm on the signaling storm; a cause of the signaling storm; a terminal device that may be affected by the signaling storm; or a recovery time of the signaling storm.

In some embodiments, the analysis result is used to determine a signaling-related policy in a fifth device, the fifth device being a subscription device for the first service.

In some embodiments, the signaling-related policy includes performing one or more of: not initiating a registration request; not initiating a connection establishment; rejecting a signaling request; or deploying a backup of the fifth device.

In some embodiments, the second device is determined based on second information pre-stored by the first device, or the second device is determined based on a model training result associated with the first service. The second information includes information of a device participating in the model training associated with the first service.

In some embodiments, the second device is one or more of: a device having a model inference/training capability; a device with a client deployed that supports model inference/training; or a device that supports interaction with a client having a model inference/training capability.

In an optional embodiment, the first transmission unit 1010, the first receiving unit 1110, the first transmission unit 1210, or the receiving unit 1310 may be a transceiver 1430. The communication device 1400 may also include a processor 1410 and a memory 1420, as specifically illustrated in FIG. 14.

FIG. 14 is a schematic configuration diagram of a communication apparatus according to an embodiment of the present disclosure. The dashed line in FIG. 14 indicates that the unit or module is optional. The apparatus 1400 may be used to implement the methods described in the method embodiments described above. The apparatus 1400 may be a chip, a terminal device, or a network device.

The apparatus 1400 may include one or more processors 1410. The processor 1410 may support the apparatus 1400 to implement the methods described in the above method embodiments. The processor 1410 may be a general-purpose processor or a special-purpose processor. For example, the processor may be a central processing unit (CPU). Alternatively, the processor may also be another general purpose processor, a digital signal processor (DSP), an application specific integrated circuit (ASIC), a field programmable gate array (FPGA) or other programmable logic device, a discrete gate or transistor logic device, a discrete hardware component, or the like. The general purpose processor may be a microprocessor or the processor may be any conventional processor or the like.

The apparatus 1400 may also include one or more memories 1420. The memory 1420 has stored a program that can be executed by the processor 1410 to cause the processor 1410 to perform the method described in the above method embodiments. The memory 1420 may be independent of the processor 1410 or may be integrated into the processor 1410.

The apparatus 1400 may also include a transceiver 1430. The processor 1410 may communicate with other devices or chips through the transceiver 1430. For example, the processor 1410 may transmit and receive data with other devices or chips through the transceiver 1430.

The embodiment of the present disclosure also provides a computer-readable storage medium for storing a program. The computer-readable storage medium can be applied to the first device or the second device provided by the embodiment of the present disclosure, and the program causes the computer to execute the method executed by the first device or the second device in the various embodiments of the present disclosure.

Embodiments of the present disclosure also provide a computer program product. The computer program product includes a program. The computer program product can be applied to the first device or the second device provided by the embodiment of the present disclosure, and the program causes the computer to execute the method executed by the first device or the second device in each embodiment of the present disclosure.

Embodiments of the present disclosure also provide a computer program. The computer program can be applied to the first device or the second device provided by the embodiment of the present disclosure, and the computer program causes the computer to execute the method executed by the first device or the second device in the respective embodiments of the present disclosure.

It is to be understood that the terms "system" and "network" may be used interchangeably in this application. In addition, the terminology used in the present disclosure is for explanation of specific embodiments of the present disclosure only, and is not intended to limit the present disclosure. The terms "first", "second", "third", and "fourth" etc. in the specification and claims of the present disclosure and the accompanying drawings are used to distinguish different objects, and are not used to describe a specific order. Furthermore, the terms "comprising" and "having" and any variations thereof are intended to cover non-exclusive inclusions.

In the embodiments of the present disclosure, the "indication" mentioned may be a direct indication, an indirect indication, or an association. For example, A indicates B, which may mean that A directly indicates B, for example, B can be acquired by A; or it may mean that A indicates B indirectly, for example A indicates C, and B can be acquired through C; or it may indicate that there is an association between A and B.

In an embodiment of the present disclosure, "B corresponding to A" means that B is associated with A, and B can be determined from A. However, it should also be understood that determining B from A does not mean that B is determined from A alone, and that B may also be determined from A and/or other information.

In the embodiments of the present disclosure, the term "correspondence" may indicate that there is a direct correspondence or indirect correspondence between the two, may indicate that there is an association between the two, or may indicate a relationship between indicating and being instructed, configuring and being configured, or the like.

In the embodiment of the present disclosure, "predefined" or "preconfigured" may be realized by storing corresponding codes, tables, or other methods that can be used to indicate relevant information in a device (including, for example, a terminal device and a network device) in advance, and the present disclosure does not limit the specific implementation method thereof. For example, predefined may refer to defined in the protocol.

In the embodiment of the present disclosure, the "protocol" may refer to a standard protocol in the communication field, and may include, for example, an LTE protocol, an NR protocol, and related protocols applied to future communication systems, and the present disclosure is not limited thereto.

The term "and/or" in the embodiment of the present disclosure is only an association describing related objects, and indicates that there may be three kinds of relationships, for example, A and/or B, which may indicate that A exists alone, A and B exist simultaneously, and B exists alone. In addition, the character "/" in the present application generally indicates that the related objects before and after are in an "or" relationship.

In various embodiments of the present disclosure, the size of the sequence number of the above-described processes does not mean the sequence of execution, and the sequence of execution of each process should be determined by its function and internal logic, and should not constitute any limitation on the implementation of the embodiments of the present disclosure.

In several embodiments provided herein, it should be understood that the disclosed systems, apparatuses, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other illustrated or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over a plurality of network units. Some or all of the units may be selected according to actual needs to achieve the purpose of the solution of the present embodiment.

In addition, each functional unit in each embodiment of the present disclosure may be integrated in one processing unit, each unit may be physically present alone, or two or more units may be integrated in one unit.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed by a computer, the processes or functions described in accordance with embodiments of the present disclosure are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server, or data center by wired (e.g., coaxial cable, optical fiber, digital subscriber line (DSL)) or wireless (e.g., infrared, wireless, microwave, etc.) means to another website site, computer, server, or data center. The computer-readable storage medium may be any available medium that can be read by a computer or a data storage device such as a server, a data center, or the like that incorporates one or more available media integrations. The available media may be magnetic media (e.g., floppy disk, hard disk, magnetic tape), optical media (e.g., digital video disc (DVD)), or semiconductor media (e.g., solid state disk (SSD)), etc.

The above is merely a specific embodiment of the present disclosure, but the scope of protection of the present disclosure is not limited thereto, and any person skilled in the art can easily think of changes or substitutions within the technical scope disclosed in the present disclosure, and should be covered within the scope of protection of the present disclosure. Therefore, the scope of protection of the present disclosure should be based on the scope of protection of the claims.

## Claims

1. A method for wireless communication, comprising:
transmitting, by a first device, a first request to one or more second devices, wherein the first request is for requesting the one or more second devices to train a model associated with a first service.

2. The method of claim 1, wherein the first request comprises at least one of the following:
an initial model;
a respective data feature associated with each of the one or more second devices;
a training time of the model associated with the first service;
a geographic area associated with the data feature;
a service identifier of the first service;
a training task identifier; or
a type of model training.

3. The method of claim 2, further comprising:
receiving, by the first device, one or more training results transmitted by the one or more second devices, wherein the one or more training results are obtained by the one or more second devices respectively training the mode associated with the first service based on their local data.

4. The method of claim 3, wherein the respective local data of each of the one or more second devices is collected by the second device based on the respective data feature.

5. The method of claim 3 or 4, further comprising:
transmitting, by the first device, a loss parameter to the one or more second devices, wherein the loss parameter is determined based on the one or more training results.

6. The method of claim 5, wherein the loss parameter is used for the one or more second devices to update the model associated with the first service.

7. The method of claim 6, further comprising:
transmitting, by the first device, first indication information to the one or more second devices, wherein the first indication information indicates that training of the model associated with the first service is completed.

8. The method of claim 7, wherein the first indication information is determined based on at least one of the following:
a preset number of model training rounds; or
the loss parameter.

9. The method of any one of claims 1-8, further comprising: before transmitting, by the first device, the first request to the one or more second devices,
transmitting, by the first device, a second request to a third device, wherein the second request is used to discover a fourth device having a model training capability, the model training capability being a capability to train the model associated with the first service.

10. The method of claim 9, wherein the second request comprises at least one of the following:
a type of model training;
a service identifier of the first service;
a data feature associated with the first service;
a training time of the model associated with the first service; or
a geographic area associated with the data feature.

11. The method of claim 9 or 10, further comprising:
receiving, by the first device from the third device, a response message to the second request, wherein the response message to the second request indicates the fourth device.

12. The method of claim 11, wherein the response message to the second request comprises at least one of the following:
an address of the fourth device; or
an address of a client associated with the fourth device.

13. The method of any one of claims 9-12, wherein the one or more second devices are part or all of fourth devices.

14. The method of claim 13, further comprising:
storing, by the first device, information about the one or more second devices.

15. The method of any one of claims 1-14, wherein the second device includes at least one of the following:
a device with a model inference/training capability;
a device deployed with a client that supports model inference/training; or
a device that can interact with a client having a model inference/training capability.

16. The method of any one of claims 1-15, wherein the first request is for requesting the one or more second devices to train the model associated with the first service based on vertical federated learning.

17. A method for wireless communication, comprising:
receiving, by a second device, a first request transmitted by a first device, wherein the first request is used to request the second device to train a model associated with a first service.

18. The method of claim 17, wherein the first request comprises at least one of the following:
an initial model;
a data feature associated with the second device;
a training time of the model associated with the first service;
a geographic area associated with the data feature;
a service identifier of the first service;
a training task identifier; or
a type of model training.

19. The method of claim 18, further comprising:
transmitting, by the second device, a training result to the first device, wherein the training result is obtained by the second device training the model associated with the first service based on local data.

20. The method of claim 19, wherein the local data is collected by the second device based on the data feature.

21. The method of claim 19 or 20, further comprising:
receiving, by the second device, a loss parameter transmitted by the first device, wherein the loss parameter is determined based on the training result.

22. The method of claim 21, wherein the loss parameter is used for the second device to update the model associated with the first service.

23. The method of claim 22, further comprising:
receiving, by the second device, first indication information transmitted by the first device, wherein the first indication information indicates that training of the model associated with the first service is completed.

24. The method of claim 23, wherein the first indication information is determined based on at least one of the following:
a preset number of model training rounds; or
the loss parameter.

25. The method of any one of claims 17-24, wherein the second device includes at least one of the following:
a device with a model inference/training capability;
a device deployed with a client that supports model inference/training; or
a device that can interact with a client having a model inference/training capability.

26. The method of any one of claims 17-25, further comprising:
registering, by the second device, capability information with a third device, wherein the capability information is associated with a model inference/training capability of the second device.

27. The method of claim 26, wherein the capability information comprises at least one of the following:
whether the model training/inference capability is available;
a service supported for model training/inference;
a data feature supported for collection;
a type of model training/inference supported;
a time period supported for model training/inference; or
a geographic area supported for model training/inference.

28. The method of any one of claims 17-27, wherein the first request is for requesting the second device to train the model associated with the first service based on vertical federated learning.

29. A method for wireless communication, comprising:
transmitting, by a first device, a third request to one or more second devices, wherein the third request is for requesting the one or more second devices to perform model inference on a model associated with a first service.

30. The method of claim 29, wherein the third request comprises at least one of the following:
a service identifier of the first service;
an inference task identifier;
a respective data feature associated with each of the one or more second devices;
a time period associated with the first service;
a geographic area associated with the first service;
a target terminal device associated with the first service; or
a model identifier associated with the first service.

31. The method of claim 29 or 30, further comprising:
receiving, by the first device, one or more inference results transmitted by the one or more second devices, wherein the one or more inference results are obtained by the one or more second devices respectively performing the model inference on the model associated with the first service based on their local data.

32. The method of claim 31, wherein the first service is signaling storm analysis, and the local data comprises at least one of the following:
mobility management information of a target terminal device;
session management information of the target terminal device;
user plane packet information of the target terminal device;
policy information associated with the target terminal device; or
subscription information associated with the target terminal device;
wherein the target terminal device is associated with the first service.

33. The method of claim 32, wherein the policy information associated with the target terminal device comprises a routing policy of the target terminal device.

34. The method of any one of claims 31-33, wherein the one or more inference results comprise an inference task identifier.

35. The method of any one of claims 31-34, further comprising:
transmitting, by the first device, an analysis result associated with the first service to a fifth device, wherein the analysis result is determined based on the one or more inference results.

36. The method of claim 35, wherein the first service is signaling storm analysis, and the analysis result comprises at least one of the following:
a level of signaling storm;
a node that generates the signaling storm;
a proportion of influence of the node generating the signaling storm on the signaling storm;
a cause of the signaling storm;
a terminal device that is affected by the signaling storm; or
a recovery time of the signaling storm.

37. The method of claim 36, wherein the analysis result is used to determine a signaling-related policy in the fifth device.

38. The method of claim 37, wherein the signaling-related policy comprises performing at least one of the following during the signaling storm:
no registration request is initiated;
no connection establishment is initiated;
rejecting a signaling request; or
deploying a backup fifth device.

39. The method of any one of claims 35-38, further comprising: before transmitting, by the first device, the third request to the one or more second devices,
receiving, by the first device, first information transmitted by the fifth device, wherein the first information is used for subscribing to the first service associated with model inference of the one or more second devices.

40. The method of claim 39, wherein the first information comprises at least one of the following:
a service identifier of the first service;
an inference task identifier;
a time period associated with the first service;
a geographic area associated with the first service;
a target terminal device associated with the first service; or
a model identifier associated with the first service.

41. The method of any one of claims 29-40, wherein one of the following applies:
the one or more second devices are determined based on second information pre-stored by the first device; or
the one or more second devices are determined based on a model training result associated with the first service,
wherein the second information comprises information about a device participating in model training associated with the first service.

42. The method of any one of claims 29-41, wherein the second device comprises at least one of the following:
a device with a model inference/training capability;
a device deployed with a client that supports model inference/training; or
a device that can interact with a client having a model inference/training capability.

43. A method for wireless communication, comprising:
receiving, by a second device, a third request transmitted by a first device, wherein the third request is for requesting the second device to perform model inference associated with a first service.

44. The method of claim 43, wherein the third request comprises at least one of the following:
a service identifier of the first service;
an inference task identifier;
a data feature associated with the second device;
a time period associated with the first service;
a geographic area associated with the first service;
a target terminal device associated with the first service; or
a model identifier associated with the first service.

45. The method of claim 43 or 44, further comprising:
transmitting, by the second device, an inference result to the first device, wherein the inference result is obtained by the second device performing the model inference on a model associated with the first service based on local data.

46. The method of claim 45, wherein the first service is signaling storm analysis, and the local data comprises at least one of the following:
mobility management information of a target terminal device;
session management information of the target terminal device;
user plane packet information of the target terminal device;
policy information associated with the target terminal device; or
subscription information associated with the target terminal device;
wherein the target terminal device is associated with the first service.

47. The method of claim 46, wherein the policy information associated with the target terminal device comprises a routing policy of the target terminal device.

48. The method of any one of claims 45-47, wherein the inference result comprises an inference task identifier.

49. The method of any one of claims 43-48, wherein the first service is signaling storm analysis, and an analysis result associated with the first service comprises at least one of the following:
a level of signaling storm;
a node that generates the signaling storm;
a proportion of influence of the node generating the signaling storm on the signaling storm;
a cause of the signaling storm;
a terminal device that is affected by the signaling storm; or
a recovery time of the signaling storm.

50. The method of claim 49, wherein the analysis result is used to determine a signaling-related policy in a fifth device, the fifth device being a subscription device for the first service.

51. The method of claim 50, wherein the signaling-related policy comprises performing at least one of the following during the signaling storm:
no registration request is initiated;
no connection establishment is initiated;
rejecting a signaling request; or
deploying a backup fifth device.

52. The method of any one of claims 43-51, wherein one of the following applies:
the second device is determined based on second information pre-stored by the first device; or
the second device is determined based on a model training result associated with the first service,
wherein the second information comprises information about a device participating in model training associated with the first service.

53. The method of any one of claims 43-52, wherein the second device comprises at least one of the following:
a device with a model inference/training capability;
a device deployed with a client that supports model inference/training; or
a device that can interact with a client having a model inference/training capability.

54. A communication device, wherein the device is a first device and comprises:
a first transmission unit, configured to transmit a first request to one or more second devices, wherein the first request is for requesting the one or more second devices to train a model associated with a first service.

55. The communication device of claim 54, wherein the first request comprises at least one of the following:
an initial model;
a respective data feature associated with each of the one or more second devices;
a training time of the model associated with the first service;
a geographic area associated with the data feature;
a service identifier of the first service;
a training task identifier; or
a type of model training.

56. The communication device of claim 55, further comprising:
a first receiving unit, configured to receive one or more training results transmitted by the one or more second devices, wherein the one or more training results are obtained by the one or more second devices respectively training the model associated with the first service based on their local data.

57. The communication device of claim 56, wherein the respective local data of each of the one or more second devices is collected by the second device based on the respective data feature.

58. The communication device of claim 56 or 57, further comprising:
a second transmission unit, configured to transmit a loss parameter to the one or more second devices, wherein the loss parameter is determined based on the one or more training results.

59. The communication device of claim 58, wherein the loss parameter is used for the one or more second devices to update the model associated with the first service.

60. The communication device of claim 59, further comprising:
a third transmission unit, configured to transmit first indication information to the one or more second devices, wherein the first indication information indicates that training of the model associated with the first service is completed.

61. The communication device of claim 60, wherein the first indication information is determined based on at least one of the following:
a preset number of model training rounds; or
the loss parameter.

62. The communication device of any of claims 54-61, further comprising:
a fourth transmission unit, configured to transmit a second request to a third device before the first device transmits the first request to the one or more second devices, wherein the second request is used for discovering a fourth device having a model training capability, the model training capability being a capability for training the model associated with the first service.

63. The communication device of claim 62, wherein the second request comprises at least one of the following:
a type of model training;
a service identifier of the first service;
a data feature associated with the first service;
a training time of the model associated with the first service; or
a geographic area associated with the data feature.

64. The communication device of claim 62 or 63, further comprising:
a second receiving unit, configured to receive, from a third device, a response message to the second request, wherein the response message to the second request indicates the fourth device.

65. The communication device of claim 64, wherein the response message to the second request comprises at least one of the following:
an address of the fourth device; or
an address of a client associated with the fourth device.

66. The communication device of any one of claims 62-65, wherein the one or more second devices are part or all of fourth devices.

67. The communication device of claim 66, further comprising:
a storage unit, configured to store information about the one or more second devices.

68. The communication device of any one of claims 54-67, wherein the second device comprises at least one of the following:
a device with a model inference/training capability;
a device deployed with a client that supports model inference/training; or
a device that can interact with a client having a model inference/training capability.

69. The communication device of any one of claims 54-68, wherein the first request is for requesting the one or more second devices to train the model associated with the first service based on vertical federated learning.

70. A communication device, wherein the communication device is a second device and comprises:
a first receiving unit, configured to receive a first request transmitted by a first device, wherein the first request is used to request the second device to train a model associated with a first service.

71. The communication device of claim 70, wherein the first request comprises at least one of the following:
an initial model;
a data feature associated with the second device;
a training time of the model associated with the first service;
a geographic area associated with the data feature;
a service identifier of the first service;
a training task identifier; or
a type of model training.

72. The communication device of claim 71, further comprising:
a first transmission unit, configured to transmit a training result to the first device, wherein the training result is obtained by the second device training the model associated with the first service based on local data.

73. The communication device of claim 72, wherein the local data is collected by the second device based on the data feature.

74. The communication device of claim 72 or 73, further comprising:
a second receiving unit, configured to receive a loss parameter transmitted by the first device, wherein the loss parameter is determined based on the training result.

75. The communication device of claim 74, wherein the loss parameter is used for the second device to update the model associated with the first service.

76. The communication device of claim 75, further comprising:
a third receiving unit, configured to receive first indication information transmitted by the first device, wherein the first indication information indicates that training of the model associated with the first service is completed.

77. The communication device of claim 76, wherein the first indication information is determined based on at least one of the following:
a preset number of model training rounds; or
the loss parameter.

78. The communication device of any one of claims 70-77, wherein the second device comprises at least one of the following:
a device with a model inference/training capability;
a device deployed with a client that supports model inference/training; or
a device that can interact with a client having a model inference/training capability.

79. The communication device of any of claims 70-78, further comprising:
a registration unit, configured to register capability information with a third device, wherein the capability information is associated with a model inference/training capability of the second device.

80. The communication device of claim 79, wherein the capability information comprises at least one of the following:
whether the model training/inference capability is available;
a service supported for model training/inference;
a data feature supported for collection;
a type of model training/inference supported;
a time period supported for model training/inference; or
a geographic area supported for model training/inference.

81. The communication device of any one of claims 70-80, wherein the first request is for requesting the second device to train the model associated with the first service based on vertical federated learning.

82. A communication device, wherein the communication device is a first device and comprises:
a first transmission unit, configured to transmit a third request to one or more second devices, wherein the third request is for requesting the one or more second devices to perform model inference on a model associated with the first service.

83. The communication device of claim 82, wherein the third request comprises at least one of the following:
a service identifier of the first service;
an inference task identifier;
a respective data feature associated with each of the one or more second devices;
a time period associated with the first service;
a geographical area associated with the first service;
a target terminal device associated with the first service; or
a model identifier associated with the first service.

84. The communication device of claim 82 or 83, further comprising:
a first receiving unit, configured to receive one or more inference results transmitted by the one or more second devices, wherein the one or more inference results are obtained by the one or more second devices respectively performing the model inference on the model associated with the first service based on their local data.

85. The communication device of claim 84, wherein the first service is signaling storm analysis, and the local data comprises at least one of the following:
mobility management information of a target terminal device;
session management information of the target terminal device;
user plane packet information of the target terminal device;
policy information associated with the target terminal device; or
subscription information associated with the target terminal device;
wherein the target terminal device is associated with the first service.

86. The communication device of claim 85, wherein the policy information associated with the target terminal device comprises a routing policy of the target terminal device.

87. The communication device of any one of claims 84-86, wherein the one or more inference results comprise an inference task identifier.

88. The communication device of any of claims 84-87, further comprising:
a second transmission unit, configured to transmit an analysis result associated with the first service to a fifth device, wherein the analysis result is determined based on the one or more inference results.

89. The communication device of claim 88, wherein the first service is signaling storm analysis, and the analysis result comprises at least one of the following:
a level of signaling storm;
a node that generates the signaling storm;
a proportion of influence of the node generating the signaling storm on the signaling storm;
a cause of the signaling storm;
a terminal device that is affected by the signaling storm; or
a recovery time of the signaling storm.

90. The communication device of claim 89, wherein the analysis result is used to determine a signaling-related policy in the fifth device.

91. The communication device of claim 90, wherein the signaling-related policy comprises performing at least one of the following during the signaling storm:
no registration request is initiated;
no connection establishment is initiated;
rejecting a signaling request; or
deploying a backup fifth device.

92. The communication device of any of claims 82-91, further comprising:
a second receiving unit, configured to receive, before the first device transmits the third request to the one or more second devices, first information transmitted by the fifth device, wherein the first information is used for subscribing to the first service associated with model inference of the one or more second devices.

93. The communication device of claim 92, wherein the first information comprises at least one of the following:
a service identifier of the first service;
an inference task identifier;
a time period associated with the first service;
a geographic area associated with the first service;
a target terminal device associated with the first service; or
a model identifier associated with the first service.

94. The communication device of any one of claims 82-93, wherein one of the following applies:
the one or more second devices are determined based on second information pre-stored by the first device; or
the one or more second devices are determined based on a model training result associated with the first service,
wherein the second information comprises information about a device participating in model training associated with the first service.

95. The communication device of any one of claims 82-94, wherein the second device comprises at least one of the following:
a device with a model inference/training capability;
a device deployed with a client that supports model inference/training; or
a device that can interact with a client having a model inference/training capability.

96. A communication device, wherein the communication device is a second device and comprises:
a receiving unit, configured to receive a third request transmitted by the first device, wherein the third request is used for requesting the second device to perform model inference associated with a first service.

97. The communication device of claim 96, wherein the third request comprises at least one of the following:
a service identifier of the first service;
an inference task identifier;
a data feature associated with the second device;
a time period associated with the first service;
a geographic area associated with the first service;
a target terminal device associated with the first service; or
a model identifier associated with the first service.

98. The communication device of claim 96 or 97, further comprising:
a transmission unit, configured to transmit an inference result to the first device, wherein the inference result is obtained by the second device performing the model inference on a model associated with the first service based on local data.

99. The communication device of claim 98, wherein the first service is signaling storm analysis, and the local data comprises at least one of the following:
mobility management information of a target terminal device;
session management information of the target terminal device;
user plane packet information of the target terminal device;
policy information associated with the target terminal device; or
subscription information associated with the target terminal device;
wherein the target terminal device is associated with the first service.

100. The communication device of claim 99, wherein the policy information associated with the target terminal device comprises a routing policy of the target terminal device.

101. The communication device of any one of claims 98-100, wherein the inference result comprises an inference task identifier.

102. The communication device of any one of claims 96-101, wherein the first service is signaling storm analysis, and an analysis result associated with the first service comprises at least one of the following:
a level of signaling storm;
a node that generates the signaling storm;
a proportion of influence of the node generating the signaling storm on the signaling storm;
a cause of the signaling storm;
a terminal device that is affected by the signaling storm; or
a recovery time of the signaling storm.

103. The communication device of claim 102, wherein the analysis result is used to determine a signaling-related policy in a fifth device, the fifth device being a subscription device for the first service.

104. The communication device of claim 103, wherein the signaling-related policy comprises performing at least one of the following during the signaling storm:
no registration request is initiated;
no connection establishment is initiated;
rejecting a signaling request; or
deploying a backup fifth device.

105. The communication device of any one of claims 96-104, wherein one of the following applies:
the second device is determined based on second information pre-stored by the first device; or
the second device is determined based on a model training result associated with the first service,
wherein the second information comprises information about a device participating in model training associated with the first service.

106. The communication device of any one of claims 96-105, wherein the second device comprises at least one of the following:
a device with a model inference/training capability;
a device deployed with a client that supports model inference/training; or
a device that can interact with a client having a model inference/training capability.

107. A communication device, comprising:
a transceiver;
a memory for storing a program; and
a processor,
wherein the processor is configured to invoke the program from the memory and control the transceiver to receive or transmit signals to cause a terminal device to perform the method of any one of claims 1-16, or the method of any one of claims 29-42.

108. A communication device, comprising:
a transceiver;
a memory for storing a program; and
a processor,
wherein the processor is configured to invoke the program from the memory and control the transceiver to receive or transmit signals to cause a terminal device to perform the method of any one of claims 17-28, or the method of any one of claims 43-53.

109. An apparatus, comprising:
a processor for invoking a program from a memory to cause the apparatus to perform the method of any one of claims 1-53.

110. A chip, comprising:
a processor for invoking a program from a memory to cause a device on which the chip is mounted to perform the method of any one of claims 1-53.

111. A computer-readable storage medium having stored thereon a program that causes a computer to perform the method of any one of claims 1-53.

112. A computer program product comprising a program that causes a computer to perform the method of any one of claims 1-53.

113. A computer program that causes a computer to perform the method of any one of claims 1-53.
